Europäisches Patentamt

(19) European Patent Office

Office européen des brevets

(11) Veröffentlichungsnummer: **0 014 309**

**A1**

(12) # EUROPÄISCHE PATENTANMELDUNG

(21) Anmeldenummer: 80100033.2

(22) Anmeldetag: 04.01.80

(51) Int. Cl.³: **G 03 B 17/26**
**G 03 B 19/02**

(30) Priorität: 12.01.79 DE 2901104
07.03.79 DE 2908814
07.03.79 DE 2908815
07.03.79 DE 2908816
25.05.79 DE 2921348

(43) Veröffentlichungstag der Anmeldung:
20.08.80 Patentblatt 80/17

(84) Benannte Vertragsstaaten:
BE CH FR GB IT NL SE

(71) Anmelder: Agfa-Gevaert AG
Camera-Werk Patent- und Lizenzwesen Postfach
D-8000 München 90(DE)

(72) Erfinder: Stemme, Otto, Dr.
Heideckstrasse 29
D-8000 München 19(DE)

(72) Erfinder: Staudacher, Frank, Dr.
Thienhausener Strasse 31
D-5657 Haan(DE)

(72) Erfinder: Lermann, Peter, Dr.
8152 Naring 106 1/2
Post Feldkirchen/Westerham(DE)

(72) Erfinder: Danhäuser, Justus, Dr.
Saarlauternerstrasse 8
D-5090 Leverkusen(DE)

(72) Erfinder: Engelsmann, Dieter
Ter-Meer-Strasse 33
D-8025 Unterhaching(DE)

(72) Erfinder: Wagner, Karl, Dr.
Wackenroderstrasse 8
D-8000 München 83(DE)

(54) Filmkassette für einen für die Aufnahme mehrerer Bilder geeigneten lichtempfindlichen Filmstreifen und zu ihrer Verwendung geeignete Kamera sowie Verfahren zu ihrer Herstellung.

㊳ Eine Filmkassette für einen für die Aufnahme mehrerer Bilder geeigneten, lichtempfindlichen Filmstreifen ist als flache, lichtundruchlässige Tasche ausgebildet, die mindestens eine senkrecht zur Taschenlänge verlaufende Öffnung zum Durchtritt des Filmstreifens aufweist. Die Tasche kann biegsam sein und in eine zu ihrer Verwendung geeignete fotografische Kamera gerade oder in einem Bogen eingelegt werden. Der Filmstreifen kann zur Belichtung in der Kamera aus der Tasche herausgezogen und wieder in sie zurücktransportiert oder an einem taschenseitigen Belichtungsfenster vorbei von einer Taschenhälfte in die andere bewegt werden. Derartige Filmkassetten haben den Vorteil, daß sie vom Benutzer als flache Kassettenstapel in größerer Zahl leicht mitführbar sind. Entsprechende Kameras weisen zur Aufnahme und Führung derartiger Taschen geeignete Kassettenräume und Mittel zum Transportieren des Films und ggf. zum Öffnen und Verschließen der Taschen in der Kamera auf. Wenn eine derartige Tasche in einer oder mehreren Biegungen in eine zugehörige Kamera eingelegt wird, können im Tascheninneren Abstandshalter zum Erhalten eines freien Innenraums beim Herausziehen und Zurückschieben des Filmstreifens vorgesehen sein. Ein Herstellungs- und Konfektionierungsverfah- ren für eine taschenartige Kassette kann in der Umhüllung des Abstandshalters mit lichtdichtem Material und vorherigem oder nachträglichem Einbringen eines Filmstreifens beste- hen.

Fig.1

# AGFA-GEVAERT AG 0014309

LEVERKUSEN

CAMERA-WERK MÜNCHEN
PATENTABTEILUNG

12. Januar 1979
10-hie-eh-ro
CW 2206.0/$^{I}$/$^{II}$/$^{III}$/$^{IV}$ PC

**Filmkassette für einen für die Aufnahme mehrerer Bilder geeigneten lichtempfindlichen Filmstreifen und zu ihrer Verwendung geeignete Kamera sowie Verfahren zu ihrer Herstellung**

Die Erfindung betrifft eine Filmkassette für einen für die Aufnahme mehrerer Bilder geeigneten, lichtempfindlichen Filmstreifen und eine für ihre Verwendung geeignete Kamera sowie ein Verfahren zu ihrer Herstellung.

Die am weitesten verbreitete Kameraart ist die Gruppe der Rollfilm-Stehbildkameras, die in den verschiedensten Ausführungsformen für unterschiedliche Filmkonfektionierungen, z. B. 135-, 126- oder 110-Kassetten oder Rollfilmspulen, geeignet sind. Allen gemeinsam ist der Nachteil, daß die den lichtempfindlichen Film enthaltenden Kassetten oder Spulen relativ groß und vor allem wegen des Wickeldurchmessers unhandlich dick sind. Somit ist die Mitführung eines größeren Filmvorrats, z. B. auf Reisen, platzraubend. Auch die Versendung der belichteten Filme, z. B. an Kopieranstalten,

CW 2206.0/I/II/III/IV PC    -2-

erfordert verhältnismäßig voluminöse Versandbeutel, die
häufig nicht mehr in übliche Briefkästen einwerfbar sind
und ein höheres Porto erfordern. Gleiches gilt auch für die
Filmkassette nach der DE-PS 877 545   bei welcher der
längliche Filmstreifen ohne Bildung eines Wickels in einer
starren Filmkassette mit einem vor und nach dem Bildfenster
um 180° umgelenkten Filmkanal geführt wird.

Beispielsweise durch die DE-OS 28 09 780 ist ein fotografisches
System bekannt geworden, bei dem der lichtempfindliche Film
als runde Scheibe ausgebildet und in einer flachen, runden
Kassette angeordnet und in ihr um die Scheibenachse drehbar
ist. Bei diesem System sind die Kassetten zwar leicht stapelbar. Sie sind jedoch verhältnismäßig breit und führen dazu, daß
die Flächenausdehnung der zugehörigen Kameras im Vergleich
zur Größe des einzelnen Filmbildes relativ groß ist. Darüber
hinaus können die Filmscheiben in den mit hohem Investitionsaufwand beschafften Weiterverarbeitungsmaschinen, mit denen die
Kopieranstalten derzeit üblicherweise ausgerüstet sind, nicht
entwickelt und kopiert werden, so daß und hierfür Sondermaschinen oder aufwendige Umrüstungseinrichtungen erforderlich
werden.

Durch die Zeitschrift "RESEARCH DISCLOSURE", Dezember 1978,
Seite 17, ist ein weiteres System von Filmeinheit, Kassette
und Kamera bekannt geworden. Hier findet ein länglicher
Filmstreifen Verwendung, der in einer flachen, länglichen Kassette
aus lichtundurchlässigem Papier angeordnet ist. Diese
Kassette kann längs eines die gesamte Filmlänge durchlaufenden,
im geschlossenen Zustand lichtdichten Falzes des Kassettenpapieres zur bildweisen Belichtung des in der Kassette enthaltenden Filmes abschnittsweise aufgefaltet und nach der
Belichtung wieder zugefaltet werden, wobei sich der Falz des
Kassettenpapiers wieder schließt. Zu diesem Zweck wird der
Film zusammen mit seiner Papierkassette durch die Belichtungsstation der Kamera transportiert, ohne daß der Film gegenüber
seiner Kassette eine Relativbewegung erfährt. Dieses System
ermöglicht zwar, daß die Filmkassetten leicht stapelbar und
schmal sind. Die Ausbildung des in seiner ganzen Länge abschnittsweise auffaltbaren und anschließend wieder lichtdicht
schließbaren Papierfalzes ist jedoch verhältnismäßig kompliziert
und aufwendig. Desgleichen sind auch in Kameras für derartige
Filmkassetten verhältnismäßig aufwendige Mittel zum selbsttätigen bildweisen Öffnen und Schließen des Kassettenfalzes
erforderlich. Hierfür ist nicht nur in, sondern auch vor und
nach der Belichtungsstation der Kamera ausreichend Raum erforderlich.

0014309

GW 2206.0/I/II/III/IV PC

Der Erfindung liegt einerseits die Aufgabe zugrunde, eine Filmkassette für einen lichtempfindlichen, für die Belichtung mehrerer Bilder geeigneten Filmstreifen zu schaffen, die möglichst flach ist und die Lagerung bzw. Unterbringung mehrerer bzw. zahlreicher Kassetten in dünnen Stapeln ermöglicht. Andererseits soll die hierfür geeignete Kamera verhältnismäßig einfach und im Bedarfsfall auch klein in ihren Abmessungen ausgebildet werden können.

Diese Aufgabe der Schaffung einer flachen Filmkassette für einen zur Aufnahme mehrerer Bilder geeigneten Filmstreifen wird erfindungsgemäß durch die Merkmale des Hauptanspruchs gelöst. Weitere vorteilhafte Merkmale einer derartigen Kassette sowie wesentliche Merkmale einer zugehörigen, erfindungsgemäßen Kamera und ein Verfahren zur Herstellung einer erfindungsgemäßen Kassette sind den Unteransprüchen entnehmbar.

- 5 -

CW 2206.0/$^I$/$^{II}$/$^{III}$/$^{IV}$ PC

Mit der vorliegenden Erfindung wird nicht nur der Vorteil
einer platzsparenden Aufbewahrung, Mitführung und Versendung
der erfindungsgemäßen Filmkassetten erreicht, sondern
infolge ihrer einfachen Ausbildung auch eine besonders
einfache und preisgünstige Konfektionierung .
Darüber hinaus bietet die Erfindung den weiteren Vorteil,
daß die Kameras bezüglich der Lagerung der Kassette sowie
bezüglich der Führung und des Transports des Films
einfach und preisgünstig ausgebildet und trotzdem
geringe Außenmaße eingehalten werden können. Außerdem wird auch die Weiterverarbeitung des Films in
herkömmlichen Entwicklungs- und Kopiermaschinen
grundsätzlich ermöglicht.

CW 2206.0 /$^I$/$^{II}$/$^{III}$/$^{IV}$ PC

Die Erfindung wird anhand von Zeichnungen näher erläutert, wobei auf weitere Einzelheiten und ihre spezifischen zusätzlichen Vorteile genauer eingegangen wird. Es zeigen

Fig. 1      eine perspektivische, vergrößerte, nicht maßstäbliche Darstellung einer Ausführungsform einer erfindungsgemäßen Filmkassette, teilweise aufgebrochen,

Fig. 2      den Film aus der Kassette gemäß Fig. 1,

Fig. 3      eine Variante der Kassette gemäß Fig. 1,

Fig. 4      eine perspektivische, vergrößerte, nicht maßstäbliche Darstellung einer anderen Ausführungsform einer erfindungsgemäßen Kassette teilweise aufgebrochen,

Fig. 5      einen Schnitt durch die Kassette nach Fig. 4

Fig. 6      eine weitere Ausgestaltung der Kassette
            nach Fig. 4,

Fig. 7      eine perspektivische, auseinandergezogene,
            aufgebrochene Darstellung der wesentlichen
            Teile einer Ausgestaltung einer erfindungsgemäßen Kamera zur Verwendung einer Filmkassette nach einer der Figuren 1 bis 6,

Fig. 8      eine Draufsicht auf die wesentlichen Teile
            einer aufgebrochen dargestellten anderen
            Ausgestaltung einer erfindungsgemäßen Kamera
            zur Verwendung einer Filmkassette nach den
            Figuren 1 bis 6,

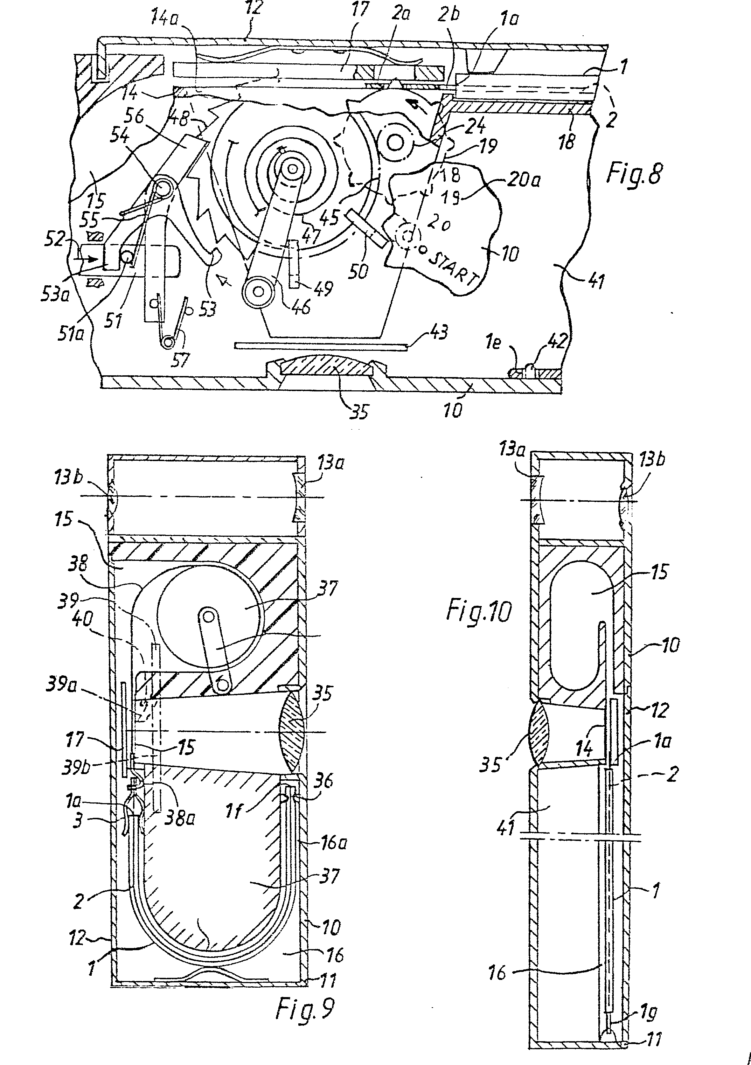

Fig. 9 u. 10 Schematische Darstellungen zweier weiterer
            Ausgestaltungen erfindungsgemäßer Kameras
            zur Verwendung einer Filmkassette nach den
            Figuren 1 bis 6,

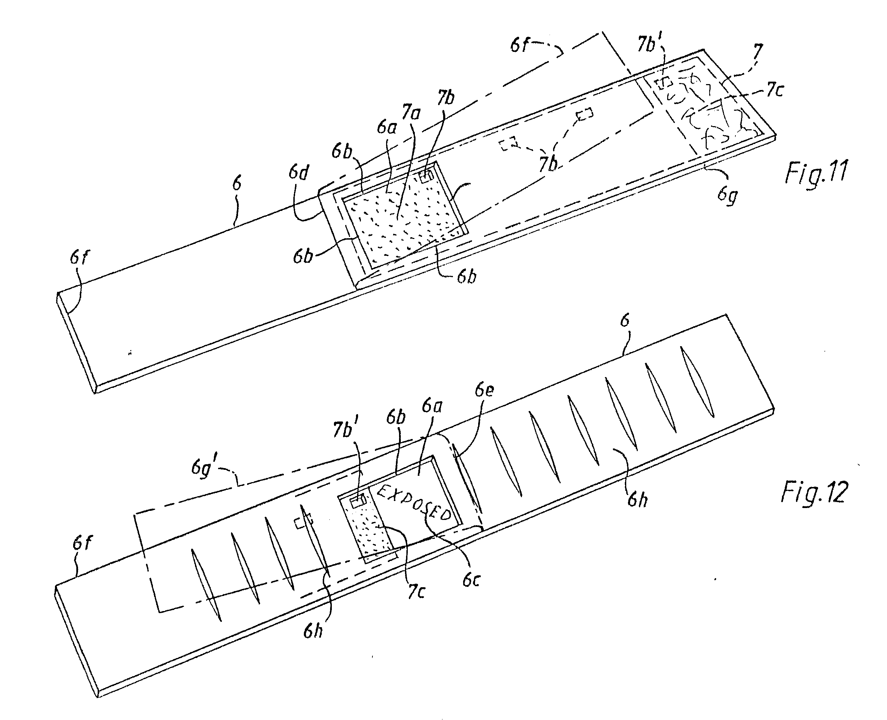

Fig. 11     eine perspektivische Darstellung einer wei-
            teren Ausführungsform einer erfindungsge-
            mäßen Filmkassette vor der Belichtung des
            Films,

Fig. 12     die Kassette gemäß Fig. 11 nach der Belichtung des Films,

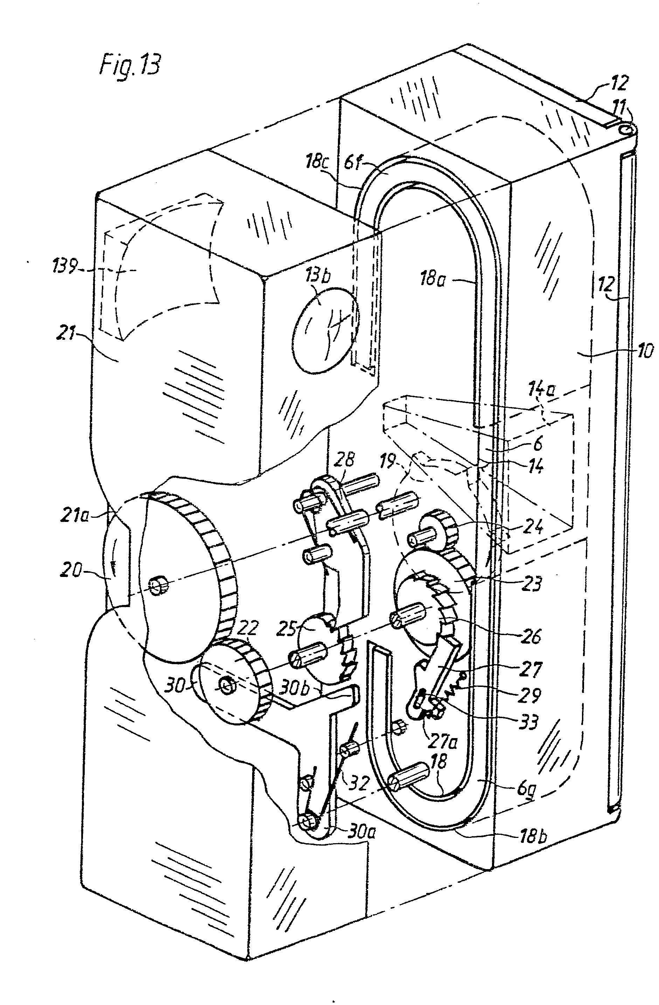

Fig. 13      eine auseinandergezogene, perspektivische Darstellung einer erfindungsgemäßen Kamera zur Verwendung der Filmkassette nach Fig. 11 und 12,

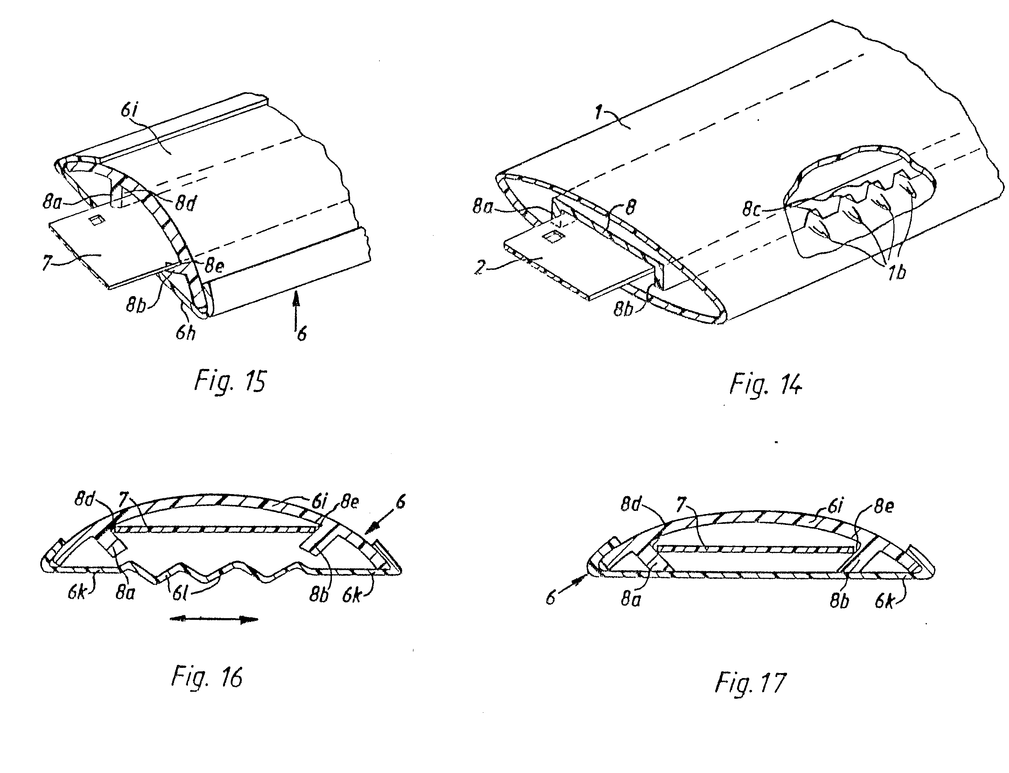

Fig. 14      eine perspektivische Darstellung eines Teilstücks einer besonderen Ausgestaltung einer erfindungsgemäßen Kassette,

Fig. 15      eine perspektivische Darstellung eines Teilstücks einer anderen besonderen Ausgestaltung einer erfindungsgemäßen Kassette,

Fig. 16      einen Schnitt durch die Kassette nach Fig. 15 in ihrer Nichtgebrauchsstellung,

Fig. 17      einen Schnitt durch die Kassette nach Fig. 15 in ihrer in eine Kamera eingesetzten gebogenen Stellung.

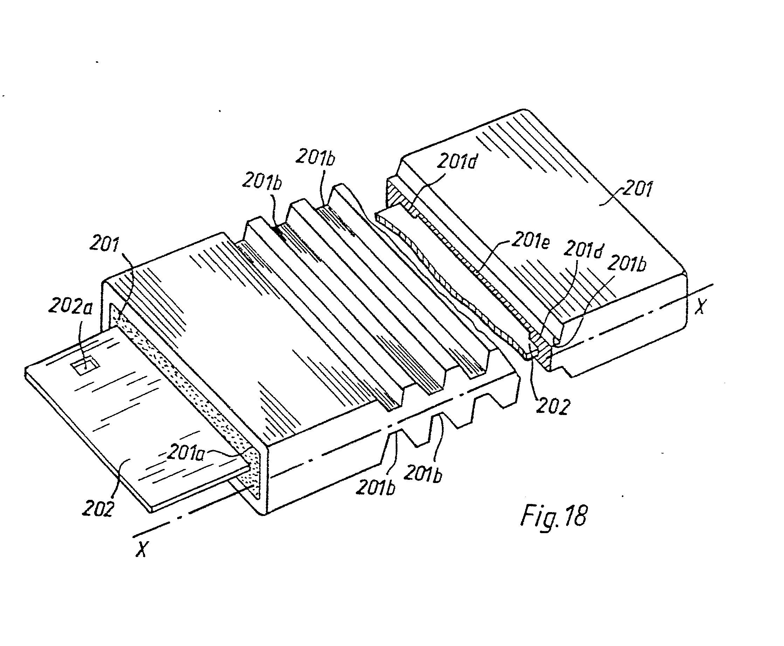

Fig. 18      eine perspektivische, nicht maßstäbliche, abbrochene Darstellung anderer Ausgestaltung einer erfindungsgemäßen Kassette,

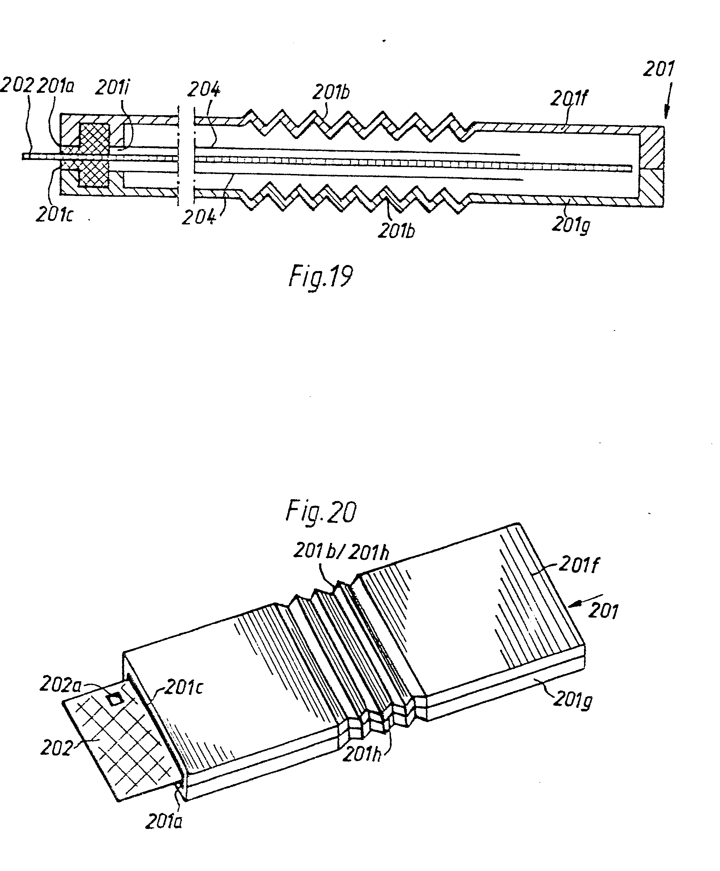

Fig. 19      einen nicht maßstäblichen Schnitt durch eine andere Ausführungsform einer erfindungsgemäßen Kassette,

Fig. 20      eine nicht maßstäbliche perspektivische Darstellung der Kassette nach Fig. 19,

0014309

CW 2206.0/$^{I}$/$^{II}$/$^{III}$/$^{IV}$ PC

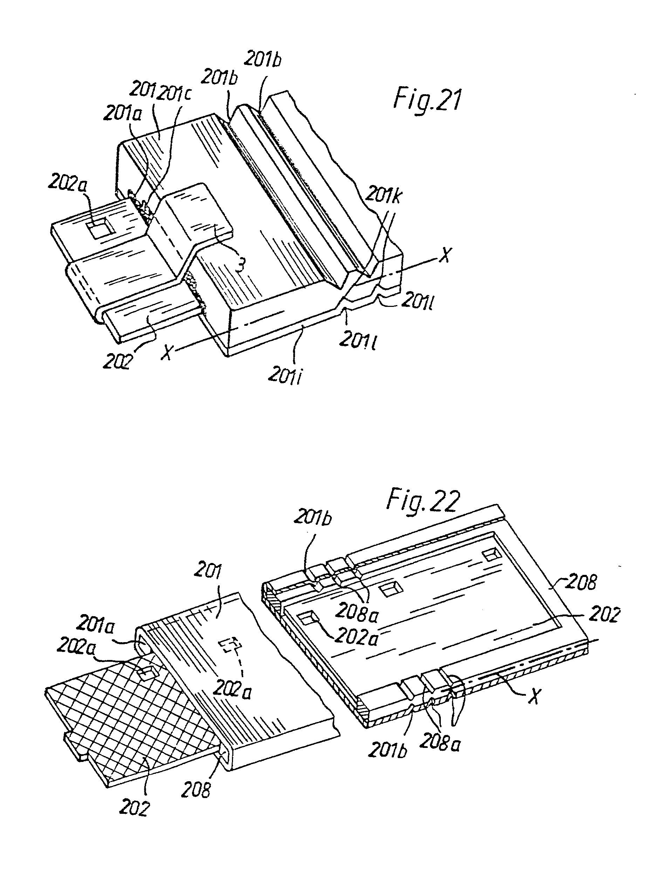

Fig. 21    eine perspektivische, nicht maßstäbliche
Darstellung von Teilen einer weiteren
Ausführungsform einer erfindungsgemäßen
Kassette,

Fig. 22    eine nicht maßstäbliche, auf- und abgebrochene, perspektivische Darstellung
einer weiteren Ausführungsform einer
erfindungsgemäßen Kassette,

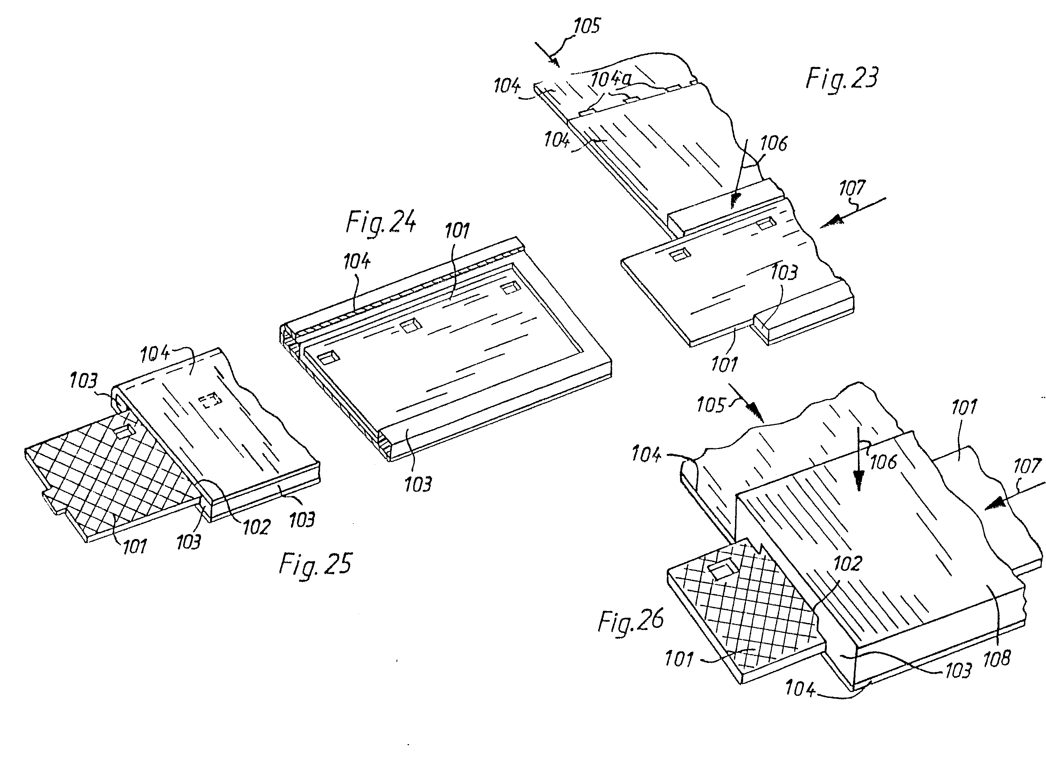

Fig. 23    eine perspektivische, abgebrochene Darstellung einer Filmkassette in einer ersten
Stufe des erfindungsgemäßen Herstellungs- und
Konfektionierungsverfahrens,

Fig. 24    eine perspektivische, abgebrochene Darstellung der Filmkassette nach Fig. 23 nach
einem weiteren Herstellungsschritt,

Fig. 25    eine perspektivische, abgebrochene Darstellung einer fertigen Filmkassette,

Fig. 26    eine perspektivische, abgebrochene Darstellung
einer nach einem anderen erfindungsgemäßen
Verfahren hergestellten Filmkassette,

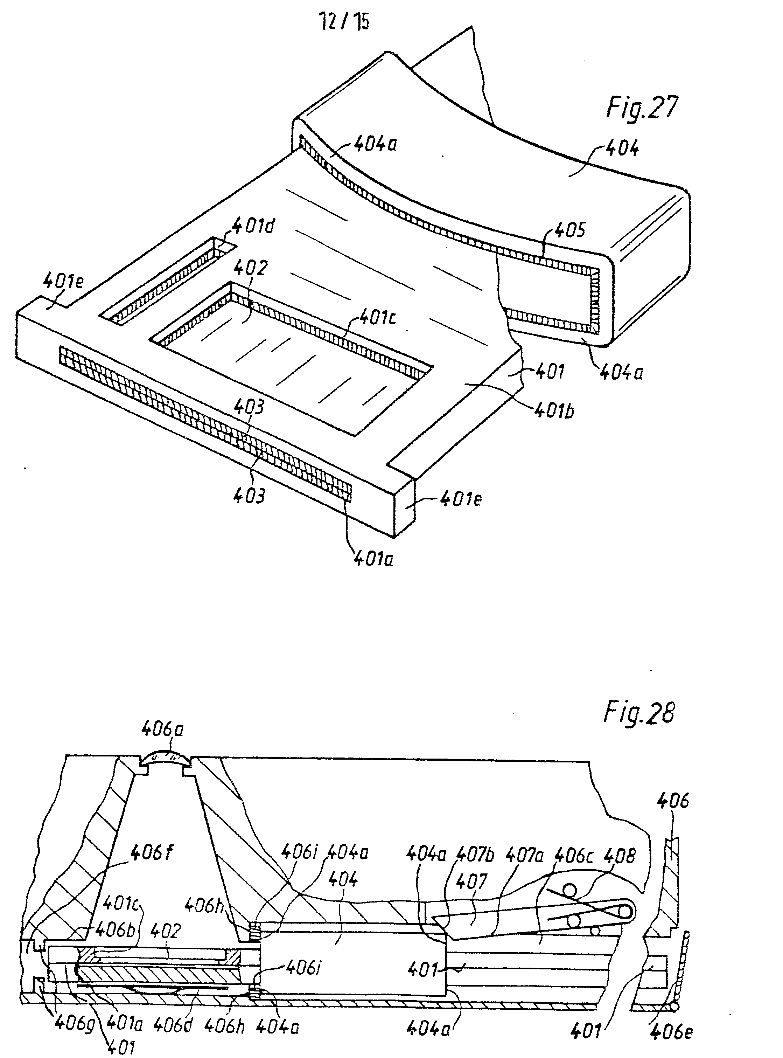

Fig. 27    eine abgebrochene, nicht maßstäbliche,
perspektivische Darstellung einer anderen
Ausgestaltung einer erfindungsgemäßen Filmkassette,

-10-

CW 2206.0/I/II/III/IV FC

Fig. 28    eine abgebrochene Ansicht der erfindungs-
           gemäßen Teile einer zur Verwendung einer
           Filmkassette nach Fig. 27 geeigneten Steh-
           bildkamera senkrecht zur Filmtransport-
           richtung und zur Objektivachse,

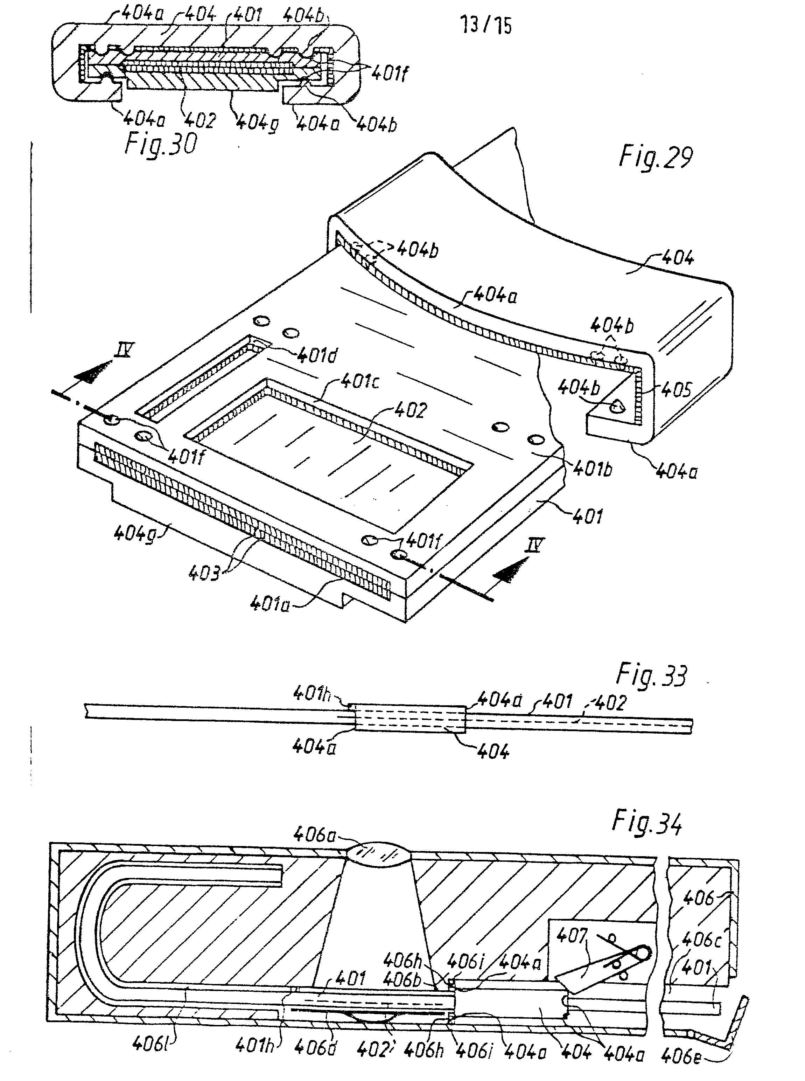

Fig. 29    eine perspektivische Darstellung von Teilen
           einer anderen Ausgestaltung einer erfindungsgemäßen Filmkassette,

Fig. 30    einen Schnitt durch die Filmkassette nach
           Fig. 29 gemäß der Schnittlinie IV-IV,

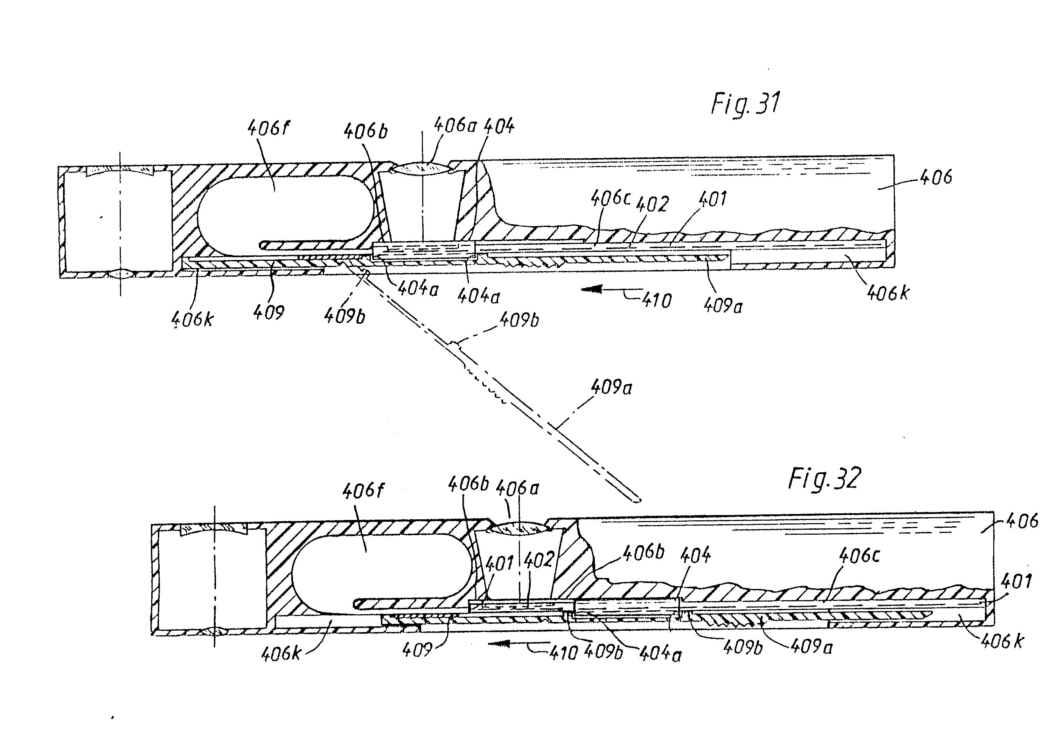

Fig. 31    eine Ansicht einer anderen erfindungsgemäßen Aus
           gestaltung einer Kamera zur Verwendung von
           Filmkassetten nach den Fig. 27, 29 oder 35 bis
           37, und zwar strichpunktiert in der geöffneten
           Stellung und ausgezogen unmittelbar nach dem
           Einsetzen einer Kassette

Fig. 32    die Kamera nach Fig. 31 in der geschlossenen,
           aufnahmebereiten Stellung,

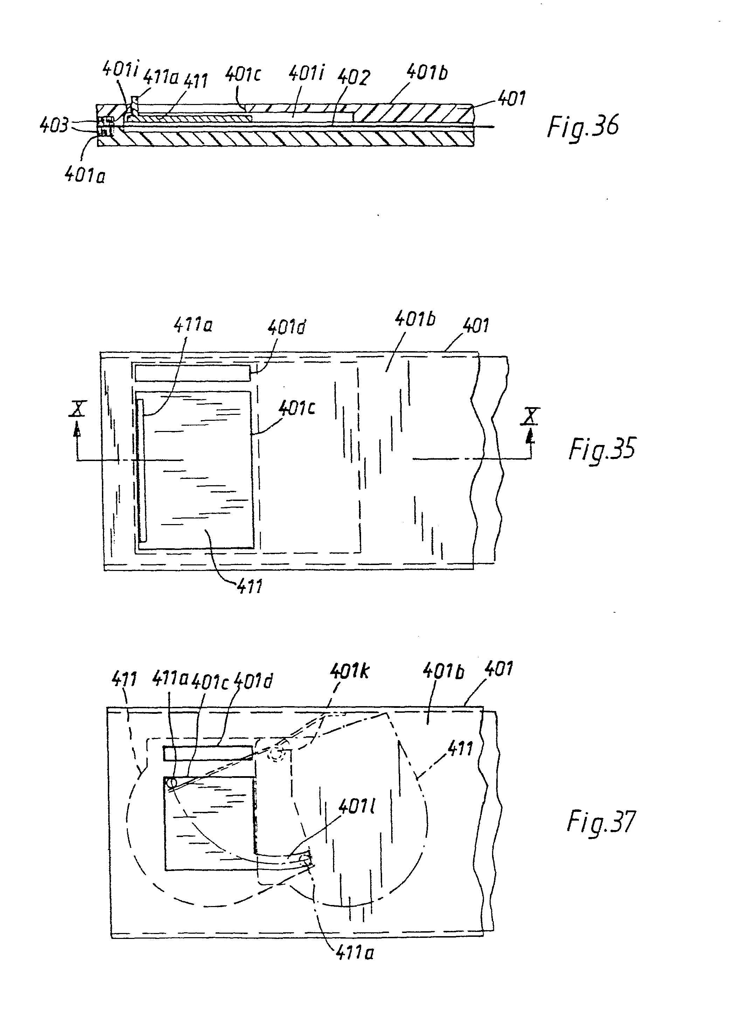

Fig. 33    eine Draufsicht auf eine weitere erfindungsgemäß
           Kassettenausgestaltung,

Fig. 34    eine Ansicht einer zur Verwendung der Kassette
           nach Fig. 33 geeigneten Kamera,

CW 2206.0/$^{I}$/$^{II}$/$^{III}$/$^{IV}$ PC

Fig. 35    eine Draufsicht auf die bildfensterseitige Flachseite einer weiteren erfindungsgemäßen Kassettenausgestaltung,

Fig. 36    einen Schnitt durch die Kassette nach
Fig. 35 gemäß der Schnittlinie X-X,

Fig. 37    eine Draufsicht auf die bildfensterseitige Flachseite eines anderen erfindungsgemäßen Ausführungsbeispiels
einer Kassette.

CW 2206.0/$^{I}$/$^{II}$/$^{III}$/$^{IV}$ PC

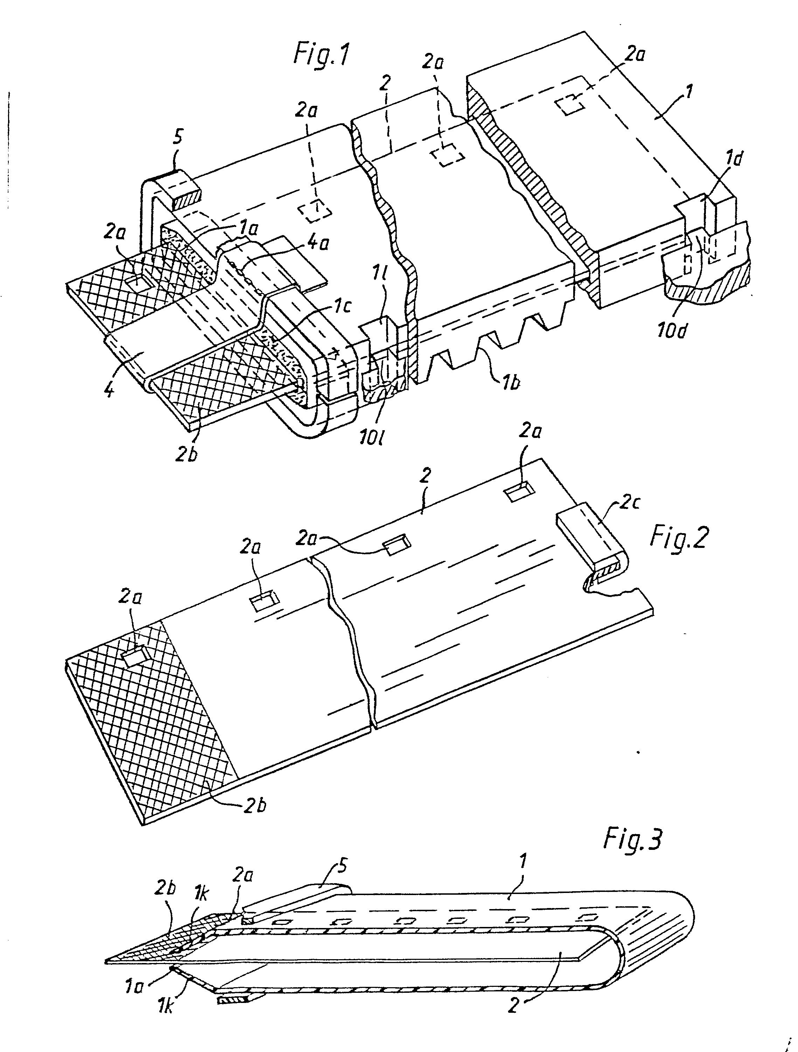

Die Filmkassetten nach den Figuren 1 bis 5 werden durch
längliche, gegenüber ihrer Länge und Breite dünne
Taschen 1 gebildet, die an ihrer einen Schmalseite
eine Öffnung, vorzugsweise einen Schlitz 1a, zum
Durchtritt des in ihnen befindlichen Filmstreifens 2
aufweisen. Der Filmstreifen 2 ist etwas länger als
die Tasche 1 und weist vorzugsweise je Bild ein
Perforationsloch 2a längs einer seiner Längskanten
auf. Grundsätzlich ist es jedoch möglich, je Bild
auf dem Filmstreifen 2 auch zwei oder mehr Perforationslöcher vorzusehen. Nach der Wahl und Anordnung der
Filmperforation richten sich die in der zugehörigen
Kamera zu verwendenden Mittel für Filmtransport und
Positionierung (z. B. Greifer oder Perforrad). Um
möglichst viele Bilder auf einem relativ kurzen
Filmstreifen 2 unterbringen zu können, ist es
zweckmäßig, Perforation 2a und zugehörige Kamera so
auszugestalten, daß die Breitseiten der einzelnen Bilder parallel
zur Schmalseite des Filmstreifens 2 verlaufen. Grundsätzlich ist aber auch ein quadratisches Bildformat oder ein Bildformat, bei dem die breiten Seiten parallel zur Längsseite des Filmstreifens verlaufen, möglich.

Die als Kassette dienende Tasche 1 besteht aus lichtdichtem
Material, z. B. lichtdichtem Papier, wie es zur Verpackung
von Filmpatronen oder für Allongen oder dergleichen bekannt
ist, oder aus lichtdichtem, gegen elektrische Aufladung,
z. B. durch Metallisierung der Innenseite, geschütztem
Kunststoff. Aus derartigem Material läßt sich die Tasche 1
so flach ausbilden, daß sie nur etwas stärker als die Filmdicke ist.

Die Tasche 1 ist so lang, daß der zur Belichtung vorgesehene
Teil des Filmstreifens 2 in ihr der Länge nach untergebracht
werden kann. Sie ist außerdem biegsam und zwar vor allem
in ihrer Längsrichtung. Um die Biegsamkeit der Tasche 1 an
den Stellen zu erhöhen, an denen sie ggf. beim Einsetzen in
eine Kamera gekrümmt werden soll, kann sie an den entsprechenden
Stellen einer ihrer oder an beiden Flachseiten Querrillen 1b
oder quer zu ihrer Länge angeordnete Falten aufweisen, die
sich beim Krümmen der Tasche 1 ziehharmonikartig zusammenschieben oder auseinanderziehen lassen (siehe Fig. 1).

CW 2206.0/I/II/III/IV PC

Dies gilt grundsätzlich auch für die in den anderen Abbildungen offenbarten Ausführungsformen der Tasche 1.

Das einfachste Ausführungsbeispiel einer derartigen
Kassette ist in den Figuren 1 und 2 gezeigt. Hier weist
der Durchtrittsschlitz 1a für den Anfang 2b des Filmstreifens
eine Ausfütterung mit Lichtabdichtungsstreifen 1c, z.B. aus Filz,auf,
zwischen denen der Filmanfang 2b nach außen ragt. Damit der
Filmanfang 2b nicht als Lichtleitstab wirkt und nicht trotz
der Lichtabdichtungsstreifen 1c zu einer Vorbelichtung des
für Aufnahmen vorgesehenen Abschnitts des Filmstreifens 2
führt, kann er eine an sich bekannte Riffelung oder Rasterung
aufweisen. Über den freiliegenden, gerasteten Filmanfang 2b
kann eine lichtdichte Lackschicht gespritzt oder ein Schutzpapierstreifen geklebt sein. Es ist auch möglich, diesen
Anfang 2b als lichtundurchlässigen Papiervorspann auszubilden.
Dies gilt grundsätzlich auch für die in den anderen Abbildungen
offenbarten Ausgestaltungen von Tasche 1 und Filmstreifen 2.

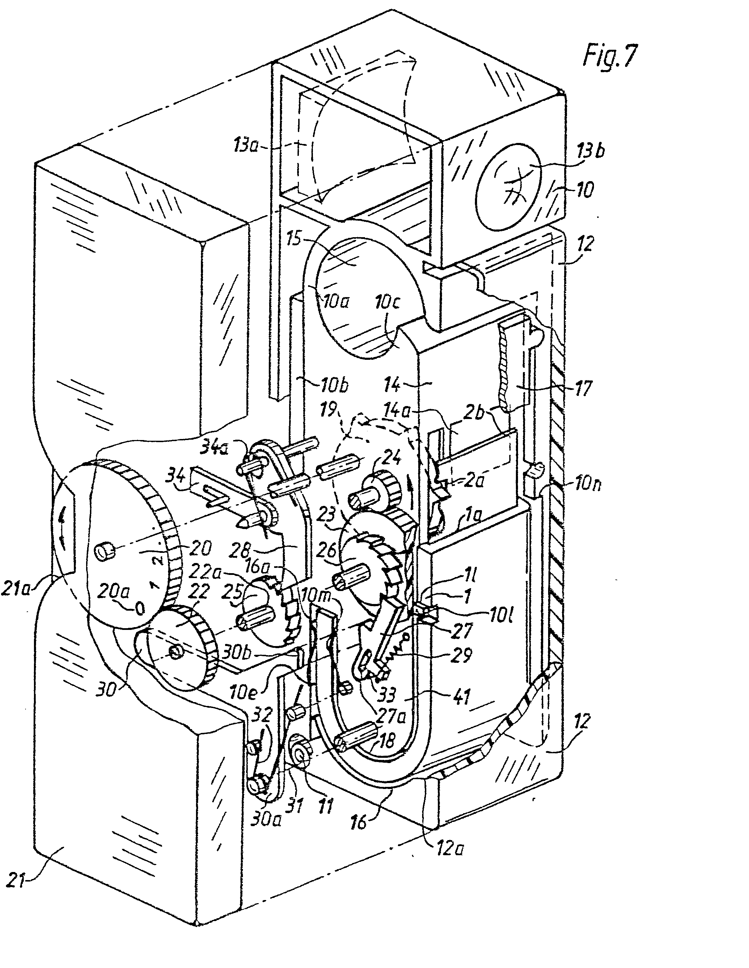

Damit die Öffnung 1a mit den Lichtabdichtungsstreifen 1c nicht
durch Zusammendrücken an den Schmalseiten aufklaffen und damit
lichtundicht werden kann, wird die Öffnung 1a mit ihren Lichtabdichtungsstreifen 1c durch einen den nahe dem
Durchtrittsschlitz 1a gelegenen Rand der Tasche 1 umgreifenden, starren Bügel 5 zusammengedrückt, der den
Durchtrittsschlitz etwa ringförmig umgibt. Zweckmäßigerweise ist dieser Bügel 5 aus Metall hergestellt und
dient zugleich als Anschlag an der Stufe 10n zur Positionierung
der Kassette in der Kamera, vgl. Fig. 7.

Das in Ausziehrichtung hintere Filmende weist eine Doppelnocke 2c (Fig. 2) auf, die so hoch ist, daß sie beim Filmauszug an den Lichtabdichtungsstreifen 1c anschlägt und somit
einen Durchtritt des Filmendes durch den Schlitz 1a der
Tasche 1 verhindert. Beim Herausziehen des Filmstreifens 2
aus der Tasche 1 verbleibt deshalb das Filmende immer in
der Tasche.

Die Tasche 1 nach Fig. 1 weist außerdem nahe ihrem
Durchtrittschlitz 1a und nahe ihrem jenseitigen geschlossenen
Ende je eine Nut 1d,1l  auf, die zur Festlegung der
Kassette in der Kamera mit je einer kameraseitigen, federnden
Nocke 10d, 10l, verrasten kann. Die Anordnung dieser Nuten und
Nocken kann auch an der der Filmperforation 2a näher gelegenen
Kante der Tasche 1 erfolgen.

CW 2206.0/I/II/III/IV PC

Um vor Einlegen der Kassette in eine Kamera ein unbeabsichtigtes Herausziehen des Filmanfangs 2b aus der
Tasche 1 zu verhindern, kann über den Filmanfang 2b und
den hieran anschließenden Taschenteil eine Siegelmarke 4,
ggf. mit einer Sollreißstelle 4a, geklebt sein. Die
aufgerissene Siegelmarke 4 gibt dem Benutzer gleichzeitig
ein sichtbares Signal gegen ein irrtümliches, erneutes
Einlegen einer bereits belichteten Kassette in eine Kamera.

Eine Abwandlung der Tasche 1 mit Filmstreifen 2 nach Fig. 1
und 2 ist in Fig. 3 gezeigt. Hier wird die Lichtabdichtung
der Öffnung 1a nicht durch Lichtabdichtungsstreifen, sondern
durch lippenförmig am Filmanfang 2b anliegende, elastische
Kanten 1k der Öffnung 1a gebildet. Die Lippen 1k werden
ebenfalls durch einen starren Bügel 5 zusammengehalten bzw.
gegen den Film gepreßt.

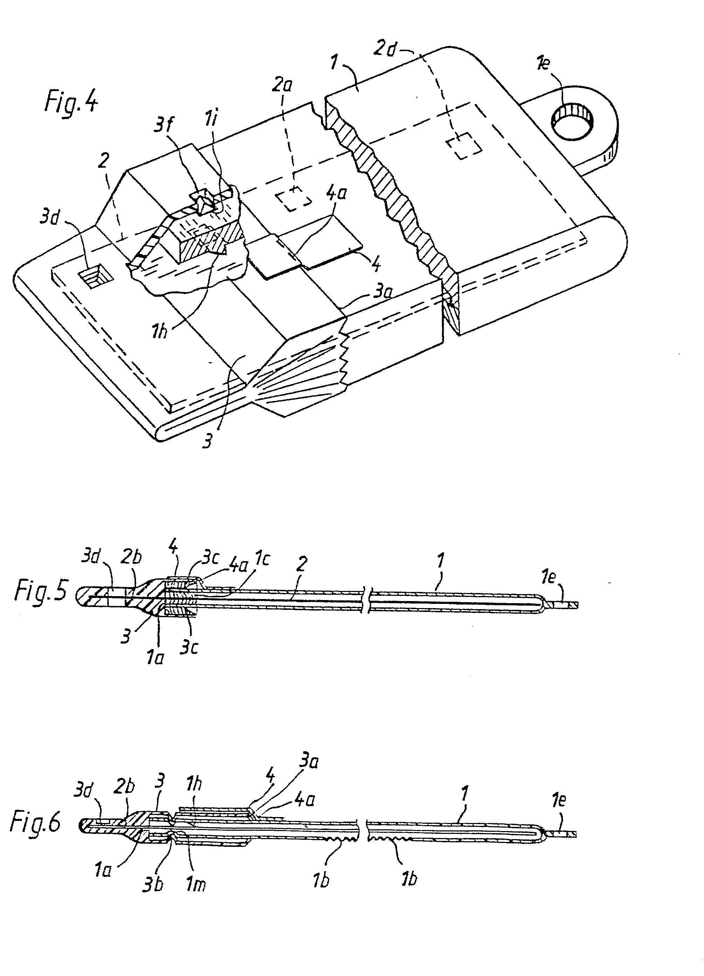

Die Ausführungsformen nach den Fig. 4 bis 6 unterscheiden
sich von den einfacheren Ausgestaltungen nach Fig. 1 bis 3
dadurch, daß ein lichtdichter Verschluß für den Schlitz 1a
in Form einer am Filmanfang 2b befestigten Verschlußkappe 3
aus lichtundurchlässigem, elastischem Material über das offe

CW 2206.0/$^{I}$/$^{II}$/$^{III}$/$^{IV}$ PC

Taschenende gestülpt ist. Die Kappe 3 ist gemäß Fig. 4 an ihren Schmalseiten vorzugsweise durch Falten 3e zusammenfaltbar, so daß sie beim Filmtransport in einer Kamera leicht zwischen Bildbühne und Filmandruckplatte hindurchbewegbar ist. Wie Fig. 5 zeigt, können zusätzlich zu oder anstelle der Lichtabdichtungsstreifen 1c der Tasche 1 an den Innenwänden der Verschlußkappe 3 Lichtabdichtungsstreifen 3c vorgesehen werden. Diese können aus Filz bestehen und keilförmig ausgebildet sein, so daß sie einen zur Tasche hin sich öffnenden Trichter bilden und somit das Aufstecken der Verschlußkappe 3 auf die Tasche 1 erleichtern.

Die Verschlußkappe 3 ist im Bezug auf die Querschnittsabmessungen der Tasche 1 so dimensioniert, daß sie auf der Tasche 1 verhältnismäßig stramm sitzt und zum Abziehen der Kappe von der Tasche eine gewisse Kraft erforderlich ist. Hierdurch wird der in der Tasche befindliche Film gegen Fehlbelichtungen durch unbeabsichtigtes Herausziehen aus der Tasche geschützt.

Zur Erzielung eines Klemmsitzes der Verschlußkappe 3 auf der Tasche 1 sowie zur Lichtabdichtung können gemäß Fig. 6

CW 2206.0 /I/II/III/IV PC  - 19 -

an den Innenwänden der Kappe 3 Rippen 3b vorgesehen
werden, die in Nuten 1m der Tasche 1 federnd eingreifen
und eine labyrinthartige Lichtabdichtung bewirken.

Zusätzlich zu den vorbeschriebenen Mitteln zur Erzielung
eines Klemmsitzes oder anstelle eines solchen Klemmsitzes
kann an der Tasche 1 - wie Fig. 4 zeigt - auch eine
Raste 1i vorgesehen werden, die in eine entsprechende
Ausnehmung 3f der Verschlußkappe 3 federnd eingreift, wenn
die Kassette geschlossen ist. Hierdurch ist die Verschlußkappe 3 gegen versehentliches Abziehen von der
Tasche 1 gesperrt und damit der Film gegen Fehlbelichtungen
durch    versehentliches Herausziehen geschützt. Beim
Einsetzen der Kassette in eine Kamera wird diese Sperre
dadurch überwunden, daß ein Zahn eines kameraseitigen
Filmtransportrades oder -greifers oder ein kameraseitiger
z. B. rückdeckelbetätigter Dorn  die Raste 1i aus der Ausnehmung 3f drückt, so daß daraufhin der Film aus der Kassette
transportiert werden kann. Nach dem vollständigen Rücktransport des Films in die Tasche kann die federnde Raste 1i
in die Ausnehmung 3f wieder einfallen, so daß der Film auch
nach der Entnahme der Kassette aus der Kamera gegen Fehlbelichtungen wiederum geschützt ist. Es können auch zwei

CW 2205.0/$^{I}$/$^{II}$/$^{III}$/$^{IV}$ PC

Rasten 1i und entsprechenden Ausnehmungen 3f in
symmetrischer Anordnung vorgesehen werden, wenn das
Ausheben dieser Rasten durch kameraseitige Dorne
geschieht.

Zusätzlich kann wiederum eine als Klebestreifen ausgebildete und mit einer Sollreißstelle 4a versehene
Siegelmarke 4 vorgesehen sein, die über den Kappenrand 3a
geklebt ist und in ihrer Wirkung der Siegelmarke 4
    der Ausführungsform gemäß der Fig. 1 entspricht.

Statt der Doppelnocke 2c gemäß Fig. 2 ist beim Film
gemäß Fig. 4 ein zusätzliches, außerhalb der normalen
Transportperforation 2a liegendes Perforationsloch 2d am
Filmende vorgesehen, das beim Heraustransportieren des
Filmes 2 aus der Tasche 1 mit einem an einer Tascheninnenwand befestigten Sperrzahn 1h in Eingriff kommt
und den Film 2 gegen völliges Herausziehen aus der Tasche 1
sichert. Auf derartige Sicherungsmittel kann verzichtet
werden, wenn die kameraseitigen Transportmittel - wie in
Fig. 8 dargestellt - so ausgestaltet sind, daß der Transport
des Filmes aus der Kamera so
rechtzeitig beendet wird, daß das Filmende in der Tasche verbleibt.

0014309

CW 2206.0/I/II/III/IV

Zum Festlegen des in Filmtransportrichtung hinteren Taschenendes in einer Kamera kann an der Tasche 1 anstelle der Nut 1d
der Ausführungsform gemäß Fig. 1 auch eine Einhängeöse 1e gemäß
Fig. 4 bis 6, ein Wulst f gemäß Fig. 8 oder ein Haken 1g
nach Fig. 9 vorgesehen werden, die beim Einsetzen der
Kassette in die Kamera mit korrespondierenden Kamerateilen
(Haken, Nut oder Öse) in Eingriff kommen.

Die den einzelnen Bildaufnahmen zugeordnete Filmperforation 2
setzt sich auch in den Filmanfang 2b (siehe Fig. 1 bis 3)
bzw. in die Verschlußkappe 3 als zusätzliches Perforationsloch 3d (siehe Fig. 4 bis 6) fort, wobei der Abstand des
zusätzlichen Perforationsloches vom Perforationsloch der
ersten Bildaufnahme dem gegenseitigen Abstand der übrigen Perforat
löcher 2a entspricht. Nach Einsetzen der Kassette in eine
entsprechende Kamera können in das zusätzliche Perforationsloch im Filmanfang 2b bzw. in der Verschlußkappe 3 die kameraseitigen Filmtransportmittel eingreifen und ein Herausziehen
des Films 2 aus der Tasche 1 bewirken, bis der Weitertransport
des Films über die reguläre Filmperforation 2a erfolgt. Selbstverständlich muß das zusätzliche Perforationsloch in Filmanfang 2b bzw. in der Kappe 3 gegen Lichteintritt ins
Tascheninnere abgedichtet sein.

CW 2206.0/I/II/III/IV PC

In Figur 7 ist eine Ausführungsform einer Kamera gezeigt,
die für die Verwendung der Kassette nach Fig. 1 ausgelegt
ist, aber ebensogut für eine Kassette nach den Figuren 3 bis 6
geeignet sein könnte. Das Kameragehäuse ist dabei mit 10
bezeichnet, der innere Kamerakörper mit 10a, eine den
nicht dargestellten Verschluß tragende Platine mit 10b,
der um eine gehäusefeste Achse 11 schwenkbare, über die
Unterseite und einen wesentlichen Teil der Rückseite verlaufende Kassettenraumdeckel mit 12, der oberhalb des Filmraums
liegende Sucher mit 13a, 13b, eine zentrisch zum nicht
sichtbaren Kameraobjektiv liegende Filmbühne mit 14, ihr
Bildfenster mit 14a, ein unterhalb des Suchers 13a, 13b
liegender spulenloser, im wesentlichen patronenförmiger
Speicherraum für den belichteten Film 2 mit 15, ein Kassettenraum für die Unterbringung einer Filmtasche 1 mit 16 und eine
nur angebrochen gezeichnete Filmandruckplatte mit 17.

Vom inneren Kamerakörper 10a sind eine Lagerplatine 10c für
das Filmtransportgetriebe sowie die den Speicherraum 15 begrenzende Wand und die Filmbühne 14 sichtbar.
Zum Kassettenraum 16 hin wird der innere Kamerakörper 10a durch
eine zur Platine 10c senkrechte Wand 18 begrenzt, die von der
Vorderseite über die Unterseite zur Kamerarückseite in einem

CW 2206.0/I/II/III/IV PC

U-förmigen Bogen verläuft. Die Wand 18 reicht vorzugsweise über die ganze Breite der Kassette 1 und dient als Führung zum Einlegen der Kassette 1 in die Kamera und zu ihrer Halterung in der Kamera.

Gegen den Kassettenraum 16 hin ist der Deckel 12 ebenfalls durch eine einen U-förmigen Bogen bildende Wand 12a begrenzt, die bei geschlossenem Deckel 12 einen etwa konstanten Abstand von der Wand 18 hat, so daß der Kassettenraum 16 die Form eines bogenförmigen Kanals hat. Seine Breite ist etwas größer als die Kassettendicke, so daß die Kassette 1 einerseits in ihm Platz findet und andererseits aber gegen Knickungen und Stauchungen in jeder Richtung gesichert ist.

Nahe der Kameravorderseite bilden die Wand 10e des Kameragehäuses 10 und die Wand 18 des inneren Kamerakörpers 10a einen Schacht 16a, an dessen Wänden je eine gegen das Schachtinnere gerichtete Blattfeder 10m vorgesehen ist. Statt dessen kann auch eine federnde, mit der Nut 11 der Kassette zusammenwirkende Nocke 101 (vgl. Fig. 1) in Schacht 16a angeordnet werden.

Zum Einlegen einer Kassette 1 in die Kamera 10 wird der Deckel 12 geöffnet und um seine Achse 11 von der Unter- und Rückseite der Kamera 10 weggeschwenkt, so daß auch der Schacht 1 gut zugänglich ist. In diesen Schacht wird das in Filmtransportrichtung hintere Ende der Kassette 1 eingeschoben, bis es den Schachtgrund erreicht. Die Federn 10m klemmen dabei das Endteil

der Kassette 1 im Schacht 16a fest, so daß es im weiteren Verlauf des Kassetteneinlegens nicht herausfallen oder sich verschieben kann und auch während des Filmtransports in seiner Lage gehalten ist. Dann wird bei geöffnetem Deckel 12 der aus dem Schacht 16a herausstehende Kassettenteil bogenförmig an die Wand 18 angelegt, wobei die Nut 11 am Kassettenanfang mit der kameraseitigen Nocke 101 in Eingriff gelangt. Die Kassette 1 ist dadurch gegen Verschiebungen in ihrer Längsrichtung während des Transports des Films aus der und in die Kassette gesichert. Die

Nocke 101 und eine Stufe 10n, die am Kameragehäuse 10 nahe der Bildbühne 14 vorgesehen ist, sind so dimensioniert, daß bei

Eingreifen der Nocke 101 in die Nut 11 die Stufe 10n einen Anschlag für die Stirnseite der Kassette 1 bildet. Schließlich wird das Perforationsloch 2a des aus der Kassette 1 vorstehenden Filmanfangs 2b in den aus der Bildbühne 14 vorstehenden Zahn des Perforrades 19 eingehängt. Hiermit ist die Kassette 1 in die Kamera 10 eingelegt und in eine Position gebracht, in der der Filmstreifen 2 durch die kameraseitigen Filmtransportmittel transportierbar ist. Nun wird der Kameradeckel 12 geschlossen, so daß seine Wand 12a den Kassettenraum 16

begrenzt und die Kassette 1 geführt und gegen Verschiebungen, Stauchungen und Verbiegungen zusätzlich gesichert ist.

CW 2206.0/$^{I}$/$^{II}$/$^{III}$/$^{IV}$ PC

Durch die bogenförmige Anordnung des Kassettenraumes 16
wird erreicht, daß die Bauhöhe der Kamera trotz der Länge
der Kassette 1 klein gehalten wird.

Beim ersten Filmtransport wird der Filmanfang oder Vorspann 2b
nach Reißen der Sollreißstelle 4a der Siegelmarke 4 in Richtung
zum Speicherraum 15 und der Filmabschnitt für das erste Bild
in das Bildfenster 14a bewegt. Der Filmstreifen 2 wird
bei Auslösung bildweise belichtet und schrittweise in den
Speicherraum 15 bewegt, wo er einen losen Wickel bildet. Nach
der letzten Aufnahme verhindert die Endverdickung 2c oder
Sonderperforation 2d zusammen mit dem Sperrzahn 1h einen
weiteren Filmtransport. Dann wird der Filmstreifen 2 durch
Drehung des Perforrades 19 in zum Filmtransport umgekehrten
Drehsinn vom Speicherraum 15 zurück in die Tasche 1 geschoben.

Um diese Transportfunktionen zu erreichen, ist zwischen dem
von Hand zu bedienenden Filmtransportknopf 20, der teilweise
in einer Ausnehmung 21a einer Kameraseitenwand 21 frei zugänglich liegt, und dem Perforrad 19 ein Zahnradgetriebe 22, 23
24 vorgesehen. Dabei ist das Zahnrad 24 mit dem Perforrad 19
drehfest verbunden und kämmt mit dem Zahnrad 23. Dieses ist
koaxial und drehfest mit einem Zahnrad 22 und zwei Sperrzahnrädern 25, 26 auf einer Welle 22a angeordnet, wobei das
Zahnrad 22 mit einer Verzahnung des Film-

CW 2206.0 /I/II/III/IV PC

transportknopfes 20 kämmt. Die Sperrverzahnung des Sperrzahnrades 25 ist so gerichtet, daß bei Eingreifen einer
Sperrklinke 27 vor einer Zahnflanke eine Drehung des Transportknopfes 20 und damit des Perforrades 19 entgegen dem Uhrzeigersinn, also gemäß der Filmtransportrichtung nicht möglich ist.
Die Sperrverzahnung des Zahnrades 25 ist entgegengesetzt
gerichtet, so daß bei Eingreifen der Sperrklinke 28 eine
Drehung des Transportknopfes 20 und des Perforrades 19 im Uhrzeigersinn, also gemäß Filmrücktransportrichtung unmöglich ist.
Sind beide Klinken 27, 28 mit ihren zugeordneten Sperrzahnrädern 26, 25 in Eingriff, so ist der Transportknopf 20
gegen jede Bewegung gesperrt.

Die Sperrklinke 27 ist mit einem Langloch 27a auf ihrer
Achse 33 gelagert und wird durch eine Feder 29 gegen das
Sperrzahnrad 26 gezogen. Der Auslösehebel 30 ist dreiarmig
ausgebildet und steht aus der Frontseite der Kamera vor,
so daß er vom Benutzer mit dem Zeigefinger einer Hand betätigt
werden kann. Mit seinem zweiten Arm 30a ist er auf einer
Achse 31 gelagert. An diesem Arm 30a greift auch eine Rückstellfeder 32 an. Wird der Auslösehebel 30 im Uhrzeigersinn
betätigt, so löst er in bekannter und daher nicht gezeigter
Weise, z. B. über seinen Arm 30b, den nicht gezeigten Verschlu

CW 2206.0/$^{I}$/$^{II}$/$^{III}$/$^{IV}$ PC

aus. Am Ende der Auslösebewegung schwenkt der Arm 30b den
Sperrhebel 27 entgegen der Wirkung der Feder 29 außer Eingriff
mit dem Sperrzahnrad 26. Da sich der Sperrhebel 27 dabei
unter der Wirkung der Feder 29 mit seinem Langloch 27a gegenüber der Achse 33 verschiebt, kann er bei Freigabe des
Auslösers 30a nicht mehr vor dem selben Sperrzahn einfallen,
sondern nur auf dessen schräge Flanke auftreffen. Somit sind
der Filmtransportknopf 20 und das Perforrad 19 zur Drehung
entgegen dem Uhrzeigersinn um einen Bildschritt freigegeben.
Nach einem Bildschritt fällt die Sperrklinke 27 vor dem
nächsten Sperrzahn des Sperrzahnrades 26 ein, wobei der Sperrhebel 27 entgegen der Wirkung seiner Feder 29 wieder bis in
seine Ausgangslage verstellt wird.

Ein Bildschritt ist somit durch den Winkelweg des Sperrzahnrades 26 um einen Zahn bestimmt. Dabei kann das Zahnradgetrie
20, 22, 23, 24 und das Perforrad 19 so ausgelegt sein, daß be
Vorhandensein eines Perforationsloches 2a je Bild ein Zahn
des Perforrades den Film um ein Bild weiter bewegt. Bei
Vorhandensein mehrerer Perforlöcher je Bild im Film könnte
aber auch durch die Drehung des Sperrzahnrades 26 um einen
Sperrzahn eine Drehung des Perforrades um soviele Zähne,
wie Perforlöcher je Bild vorgesehen sind, bewirkt werden.

CW 2206.0/I/II/III/IV

Nach der nächsten Betätigung des Auslösers 30 ist dann wieder ein Filmtransport möglich, bis der letzte für die Belichtung zur Verfügung stehende Teil des Filmstreifen 2 im Bildfenster 14a erscheint und der Filmstreifen gegen einen weiteren Transport gesperrt ist.

Um nach der letzten Aufnahme den belichteten Filmstreifen 2 vom Speicherraum 15 in die Tasche 1 zurückzuschieben, wird der aus der Kamerafrontplatte vorstehende Rückspulschieber 34 vom Benutzer nach innen gegen die Sperrklinke 28 verschoben, so daß diese außer Eingriff mit dem Sperrzahnrad 25 gehalten wird. Solange der unter der Wirkung der Rückstellfeder 34 a stehende Rückspulschieber 34 auf die Sperrklinke 28 wirkt, kann über den Filmtransportknopf 21a das Perforrad 19 im Uhrzeigersinn zum Zurückschieben des Filmstreifens 2 in die Tasche 1 gedreht werden. Ist der Filmstreifen 2 in die Tasche 1 ganz eingeschoben, so kann die Kassette 1 nach Öffnen des Deckels 12 entnommen werden. Die aufgerissene Siegelmarke 4 zeigt dem Benutzer an, daß der Film belichtet ist, und schützt so vor versehentlichem erneuten Einlegen in die Kamera.

Da die Tasche 1 in ihrer gestreckten Lage flach ist, kann sie mühelos zusammen mit mehreren anderen Taschen, z. B. in der

- 20 -

CW 2206.0$^{I}$/$^{II}$/$^{III}$/$^{IV}$ PC

Brieftasche oder Handtasche mitgenommen oder in einem Briefumschlag an eine Entwicklungs- und Kopieranstalt geschickt
werden.

Da der Transportknopf 20 wegen der konstanten Längen der Filmstreifen 2 immer gleiche Winkelwege pro Bild zurücklegt,
kann auf ihm direkt eine Zählscheibe 20a angebracht werden,
die gegenüber einer nicht gezeigten Ausgangsmarkierung an der
Kameraseitenwand 21 ablesbar sein kann.

Figur 8 zeigt Teile einer Kamera zur Verwendung von
Kassetten nach den Figuren 1 bis 6 mit einem Federwerksantrieb für den Filmtransport. Dabei sind wiederum gleichwirken
Teile mit denselben Bezugsziffern versehen wie in den Figuren 1
bis 7. Zusätzlich sind schematisch das Objektiv 35 und
der Verschluß 43 angedeutet.

Brieftasche oder Handtasche mitgenommen oder in einem Briefumschlag an eine Entwicklungs- und Kopieranstalt geschickt
werden.

Da der Transportknopf 20 wegen der konstanten Längen der Filmstreifen 2 immer gleiche Winkelwege pro Bild zurücklegt,
kann auf ihm direkt eine Zählscheibe 20a angebracht werden,
die gegenüber einer nicht gezeigten Ausgangsmarkierung an der
Kameraseitenwand 21 ablesbar sein kann.

Figur 8 zeigt Teile einer Kamera zur Verwendung von
Kassetten nach den Figuren 1 bis 6 mit einem Federwerksantrieb für den Filmtransport. Dabei sind wiederum gleichwirkende
Teile mit denselben Bezugsziffern versehen wie in den Figuren 1
bis 7. Zusätzlich sind schematisch das Objektiv 35 und
der Verschluß 43 angedeutet.

CW 2206.0/$^{I/II/III/IV}$ FC

Mit dem mit dem Perforrad 19 verbundenen Zahnrad 24 steht ein Zahnrad 45 in Eingriff, mit dem eine Kurbel 46 fest verbunde ist. An der Kurbel 46 ist das Ende einer Federwerksfeder 47 befestigt. Mit dem Zahnrad 45 ist ein Sperrzahnrad 48 verbunden, dessen schräge Flanken eine Drehung im Uhrzeigersinn zulassen, was einer Drehung des Perforrades entgegen dem Uhrzeigersinn und einem Transport des Filmstreifens 2 in den Speicherraum 15 entspricht. Das andere Ende der Federwerksfeder 47 ist an einem kamerafesten Anschlag 49 eingehängt. Die Kurbel 46 ist zwischen diesem kamerafesten Anschlag 49 und einem weiteren kamerafesten Anschlag 50 drehbar.

Der Kameraauslöser 51 ist als Schieber ausgebildet, wobei in Betätigungsrichtung gemäß Pfeil 52 hinter einem Stift 51a ein Arm 53a eines um die Achse 54 drehbaren, zweiarmigen Sperrhebels 53 unter der Wirkung der Feder 55 anliegt. In der Ruhestellung des Auslösers 51 gibt der Sperrhebel 53 das Sperrzahnrad 48 frei. Auf der Achse 54 ist ein zweiter Sperrhebel 56 gelagert, der unter der Wirkung einer Feder 57 vor einem Zahn des Sperrades 48 liegt.

CW 2206.0 /I/II/III/IV PC

Ist eine Kassette 1 in die Kamera eingelegt und der Rückdeckel 12 geschlossen, so wird die Kurbel 46 vom Anschlag 49
im Uhrzeigersinn bis zum Anschlag 50 gedreht. Die Übersetzung zwischen dem Zahnrad 45 und dem Zahnrad 24 ist so
ausgelegt, daß hierbei das Perforrad 19 unter Aufbrechen
der Siegelmarke 4 den Filmanfang 2b aus der Tasche 1
herauszieht und den für die Belichtung insgesamt verfügbaren
Filmstreifen 2 weitgehend in den Speicherraum 15 transportiert,
ohne jedoch das Filmende aus der Öffnung 1a herauszureißen.
Bei dieser Ausgestaltung ist also eine Ausziehsperre zwischen
dem Filmende und der Öffnung der Tasche 1 entbehrlich. Ist
der Filmstreifen 2 in den Speicherraum 15 geschoben und die
Kurbel 46 am Anschlag 50 aufgetroffen, so ist das Federwerk 47
gespannt und durch die Klinke 56 am Ablauf gehindert.

Wird nun der Auslöser 51 in Richtung des Pfeiles 52 betätigt,
so folgt der Sperrhebel 53 entgegen dem Uhrzeigersinn nach
und liegt etwas vor einer radialen Zahnflanke des Sperrrades 48. Kurz danach wird der Sperrhebel 56 durch den
Stift 51a vom Sperrad 48 abgehoben, so daß dieses unter der
Wirkung der Federwerksfeder 47 ein kleines Stück abläuft,
bis die erwähnte radiale Zahnflanke auf den Sperrhebel 53 trifft.

CW 2206.0/$^{I}$/$^{II}$/$^{III}$/$^{IV}$ PC

Ein Filmtransport findet dabei noch nicht statt. Wird nun der Auslöser 51 freigegeben, so kann der Sperrhebel 56 nicht mehr vor der Zahnflanke, vor der er bei der Auslösung lag, einfallen, sondern nur mehr auf die darauffolgende Schrägfläche des Sperrzahnrades 48 treffen. Nachdem bei Freigabe des Auslösers 51 aber auch der Sperrhebel 53 wieder vom Sperrad 48 unter der Wirkung einer nicht gezeigten Rückstellfeder für den Auslöser abgehoben worden ist, läuft nun das Federwerk 47 samt Sperrad 48, Zahnrad 45 und Kurbel 46 um einen Zahn der Sperrverzahnung des Sperrades 48 entgegen dem Uhrzeigersinn ab. Die Zahnteilung des Sperrades 48 ist so ausgelegt, daß hierbei das Perforrad 19 den im Speicherraum 15 befindlichen Filmstreifen 2 um einen Bildschritt zurück in die Tasche 1 schiebt.

Bei Verwendung einer Kassette 1 mit Kappe 3 ist die Kraft des Federwerks 47 und sein Arbeitsweg zwischen den Anschlägen 50 und 49 außerdem so zu bemessen, daß das in die Perforation 3d eingreifende Perforrad 19 die Verschlußkappe 3 zunächst von der Tasche 1 abzieht und dann wieder fest auf die Tasche 1 drückt und diese wieder lichtdicht verschließt. Letzteres kann entweder durch Ineingriffbringen der Rasterung 1m, 3b nach Fig. 6 und/oder durch Überschieben des Lichtabdichtungsstreifens 3c über den Taschenanfang gemäß Fig. 5 erfolgen. Das Überschieben der Lichtabdichtungsstreifen 3c wird erleichtert, wenn diese gemäß Fig. 5 trichterförmig gegen die die Tasche 1 hin ausgebildet sind. Die Kurbel 46 dient zusammen mit den Marken 20a gleichzeitig als Bildzählwerk.

CW 2206.0/I/II/III/IV PC

Die Figuren 9 und 10 zeigen Prinzipanordnungen für andere
mögliche Kameraausgestaltungen. Dabei sind für gleiche Teile
dieselben Bezugsziffern verwendet wie in Fig. 7 und 8.
Gemäß Figur 9 ist der Deckel 12 entsprechend der Anordnung
nach Fig. 7 abgewinkelt, bei der Anordnung nach Fig. 10 braucht
er sich nur über die Kamerarückseite zu erstrecken.

Nach Fig. 9 ist das Taschenende mit einem Wulst 1f in eine
Nut 36 des Einsteckschachtes 16a gehalten. Im Speicherraum 15
ist eine Aufwickelspule 37 vorgesehen, die durch eine auf
ihrer Achse angeordnete Kurbel 46 drehbar und mit einem Band 38
verbunden ist, dessen Haken 38a in ein Perforationsloch des
Filmanfangs 2b bzw. der Verschlußkappe 3 einhängbar ist.
Beim Drehen der Spule 37 im Uhrzeigersinn über die Kurbel 46
reißt die Sollrißstelle 4a der Verschlußmarke 4. Der Filmanfang 2b bzw. die Verschlußkappe 3 und der Filmstreifen 2 werden
auf die Spule 37 gewickelt, bis die Ausziehsperre 2c bzw. 2d,
1h eine weitere Bewegung des Filmstreifens 2 aus der Tasche 1
verhindert. Die Belichtung der einzelnen Filmabschnitte erfolgt
jeweils zwischen dem schrittweisen Zurückschieben des Filmstreifens 2 in die Tasche 1. Hierzu kann ein in einer
Schlitzführung 39b vom Benutzer verschiebbarer, an sich
bekannter Transportschieber 39 mit einem federnden Greifer 39a

CW 2206.0 /I/II/III/IV PC

dienen, der bei Betätigung in Richtung von oben nach unten
in die Filmperforation 2a eingreift und beim Aufwickeln
des Filmstreifens auf die Spule 37 in eine Lage zurückgeschoben werden kann, in der der Greifer 39a durch einen Stift
vom Filmstreifen 2 abgehoben ist.

Gemäß Fig. 10 ist die Tasche 1 langgestreckt im Kassettenraum 16 angeordnet. Die Kamera 10 wird dadurch länger, aber
auch flacher. Dementsprechend ist der Speicherraum 15 zwar
noch im wesentlichen patronenförmig, jedoch als längliches
Oval ausgebildet.

Freie Kameraräume 41 neben dem Kassettenraum 16 oder innerhalb der Rundung des Kassettenraums 16 können zur Unterbringung von Kamerateilen, wie Batterien, Verschlußantriebsteilen usw. verwendet werden.

Die Figuren 11 und 12 zeigen eine nicht maßstäblich dargestellte, weitere Ausgestaltung einer erfindungsgemäßen tasche
artigen Filmkassette 6, die etwa die doppelte Länge des in it
unterzubringenden, lichtempfindlichen, für die Aufnahme
mehrerer Bilder geeigneten Filmstreifens 7 hat. Auf einer
ihrer Flachseiten ist etwa in ihrer Mitte ein Belichtungsfenster 6a vorgesehen, dessen quer und parallel zur Länge
des Streifens 7 verlaufende Durchtrittsschlitze 6b für den
Filmstreifen 7 mit an sich bekannten und daher nicht erneut
gezeigten Lichtabdichtungsmitteln lichtdicht gegenüber
der übrigen Tasche 6 abgeschlossen sind. Der unbelichtete
Filmstreifen 7 ist in einer Taschenhälfte 6g untergebracht,
gemäß Fig. 11 in der rechten Taschenhälfte, wobei im Belichtungsfenster 6a ein Vorspann 7a mit einem Perforationsloch 7b liegt. Der Vorspann 7a kann durch Rasterung des
Films oder durch eine lichtdichte Lackierung nicht lichtleitend ausgebildet sein oder aus Allongenpapier bestehen.
Außerdem weist der Filmstreifen 7 nach dem letzten Bild einen
entsprechenden lichtundurchlässigen bzw. nicht lichtleitenden
Nachspann 7c auf. Die dem Belichtungsfenster 6a zugewandte
Innenseite der Tasche oder der Nachspann 7c kann eine Markierung
6c aufweisen, daß der Filmstreifen 7 belichtet ist.

Bei dieser Taschenausbildung wird das Belichtungsfenster 6a
der Tasche 6 auf das Bildfenster 14a der Kamera ausgerichtet
und nach dem Schließen der Kamera durch die Filmtransportmittel beim ersten Filmtransport der Vorspann 7a in den freien
Taschenteil 6f - in den Figuren 11 und 12 ist es der linke

CW 2206.0/<sup>I</sup>/<sup>II</sup>/<sup>III</sup>/<sup>IV</sup> PC

Taschenteil - geschoben. Dann wechselt in üblicher Weise
jeweils eine Belichtung des im Belichtungsfenster 6a befindlichen Bildabschnitts mit einem Filmtransport, wobei
der nunmehr belichtete Filmstreifen in den freien Taschenteil 6f geschoben wird. Schließlich befindet sich nur noch
der Nachspann 7c im Belichtungsfenster. Das ihm zugeordnete
Perforloch 7b' ist so angeordnet, daß die Filmtransportmittel nicht in der Lage sind, den Nachspann 7c völlig in
den linken Taschenteil, der zur Aufnahme des belichteten
Filmstreifens dient, einzuschieben, so daß er als Lichtabdichtung zusammen mit den vorgesehenen Lichtabdichtungsmitteln wirkt. Nun kann die Tasche 6 der Kamera ohne Filmrücktransport entnommen werden. Dabei sind Taschen, die
belichtete Filmstreifen enthalten, von neuen Taschen mit unbelichteten Filmstreifen durch die Markierung   6c zu unterscheiden, die am Ende des Filmtransports sichtbar wird.

Da die Taschen 6 etwa doppelt so lang sind wie die Länge der
Filmstreifen 7, muß zur Mitführung in normalen Brieftaschen
oder zum Versand in normalen Briefumschlägen die Möglichkeit
vorgesehen werden, die Taschen 6 zu falten. Deshalb sind vor
und nach dem Belichtungsfenster 6a quer zur Taschenlänge verlaufende Faltstellen 6d und 6e vorgesehen, die durch
Rillen, Nuten oder sonstige Materialverdünnungen der
bildfensterseitigen Taschenfläche oder Falten der rückwärtigen Taschenfläche gebildet sein können. Die seitlich
neben dem Belichtungsfenster 6a im Taschenteil 6f für den
unbelichteten Filmstreifen liegende Faltstelle 6d dient zum
Umschlagen dieses in der Figur linken Taschenteile 6f zum
Falten von Taschen mit unbelichtetem Film. Sie liegt nicht
nur neben dem Belichtungsfenster, sondern auch neben dem
Ende des Vorspanns 7a, so daß beim Falten der Filmstreifen 7 nicht geknickt wird. Umgekehrt liegt die Faltstelle 6e zum Falten des leergewordenen, rechten Taschenteils 6g, das unbelichteten Film enthalten hatte, rechts neben
dem Belichtungsfenster 6a, so daß auch beim Falten dieses
Taschenteils 6g der Filmstreifen 7 nicht geknickt wird. Die
Faltstellung für Taschen mit unbelichteten Filmstreifen ist
strichpunktiert in Fig. 11, die für Taschen mit belichteten
Filmstreifen strichpunktiert in Fig. 12 gezeigt. Die Taschenflächen können auch bei dieser Taschenausgestaltung mit Rillen
oder Falten 6h versehen sein, um ihre Biegsamkeit zu erhöhen.

CW 2206.0/$^{I}$/$^{II}$/$^{III}$/$^{IV}$ PC

In Fig. 13 ist eine Kamera gezeigt, die zur Verwendung
einer Tasche 6 geeignet ist. Mit der Kamera nach Fig. 7
funktionsmäßig gleiche Teile sind dabei mit denselben
Bezugsziffern versehen wie die Ausgestaltung nach Fig. 7.
Da bei Verwendung einer Filmtasche 6 der Filmstreifen 7
vom Taschenteil 6g in den Taschenteil 6f transportiert
wird und nicht zurückgeschoben werden muß, entfällt gegenüber
der Ausführungsform nach Fig. 7 der Rückspulschieber 34.
Statt dessen sind über das Sperrzahnrad 25 und die Klinke 28
der Filmtransportknopf 20 und das Perforrad 19 ständig gegen
Drehung entgegen der der Filmtransportrichtung entsprechenden
Richtung gesperrt. Eine Drehung in der der Filmtransportrichtung entsprechenden Richtung ist dagegen entsprechend
der Ausgestaltung nach Fig. 7 nach jeder Betätigung des
Auslösers 30 möglich.

Ein weiterer Unterschied der Ausgestaltung nach Fig. 13
gegenüber der nach Fig. 7 besteht darin, daß der Kameradeckel 12 sich über das rückwärtige Seitenteil 2 der Kamera,
also senkrecht zum Bildfenster 14a erstreckt und um eine
parallel zur Filmtransportrichtung verlaufende Achse 11
drehbar ist. Außerdem ist zusätzlich zur Führungswand 18 für die Taschenhälfte 6g eine dieser gleiche oder ähnliche
Führungswand 18a für die den belichteten Film aufnehmende
Taschenhälfte 6f vorgesehen. Beiden Führungen 18, 18a sind im
Abstand hiervon nach außen weitere Führungen 18b, 18c zugeordnet, so daß eine in die Kamera 10 eingesetzte Tasche 6
in zwei Schächten 18, 18b bzw. 18a, 18c jeweils in einem
Bogen zu beiden Seiten des Bildfensters 14a geführt ist.
Deshalb ist es zweckmäßig, den Kameradeckel 12 an der rückwärtigen Seite des Kameragehäuses 10 vorzusehen und von dort
die Tasche 6 seitlich in die Schächte einzuschieben. Im
übrigen können zur Sicherung der Tasche 6 in ihrer richtigen
Lage einander zugeordnete Fixiermittel an Tasche und Kamera
vorgesehen sein, etwa in der Art von Fixierstiften an der
Kamera und Ausnehmungen an der Tasche sowie bereits beschriebene Mittel zum Einhängen der beiden Taschenenden
an der Kamera.

CW 2206.0 /[I]/[II]/[III]/[IV] PC

Zur Gewährleistung eines offenen Filmkanals in der Tasche
kann es vorteilhaft sein, daß in der Tasche 1, 6 Abstandshalter 8a, 8b gemäß den Fig. 14 bis 17 vorgesehen
werden. Dabei sind die Maße und Maßverhältnisse in diesen
Abbildungen nicht maßstäblich und zur besseren Anschaulichkeit
zum Teil übertrieben dargestellt. Die Abstandshalter 8a, 8b,
die kaum höher als die Filmdicke sind, sind seitlich der
Filmbahn für den Filmstreifen 2, 7 in der Tasche 1, 6 angeordn
so daß sie zugleich als seitliche Filmführungen dienen und
die Aufrechterhaltung eines freien Filmkanals auch in
bogenförmig gekrümmten Abschnitten der Tasche 1, 6 gewährleisten.

Gemäß Fig. 14 sind die Abstandshalter 8a, 8b durch eine parall
zur Flachseite des Filmstreifens 2 verlaufende Führungsbahn 8
miteinander verbunden und als Einheit in die Tasche 1 eingesetzt. Diese Einheit 8, 8a, 8b kann beispielsweise mit den
Enden der Tasche 1 verbunden sein. Damit sich diese der Abstandshalterung und Filmführung dienende Einheit 8, 8a, 8b in

-41-

CW 2206.C /I/II/III/IV PC

der Kamera zusammen mit der Tasche 1 in einem Bogen anordnen läßt, kann es zweckmäßig sein, daß die Abstandshalteleisten 8a, 8b an den zu biegenden Stellen Nuten 8c
aufweisen. Diese können trapez- oder dreiecksförmig sein,
so daß sich beim Biegen der Tasche 1 ihre schrägen Kanten
einander annähern können. Die Tasche 1, in die die Führungseinheit 8, 8a, 8b eingesetzt ist, sollte eine gewisse
Elastizität nicht nur in ihrer Längsrichtung, sondern
auch quer zur Taschenlänge haben, so daß sich die Taschenflachseiten um die Führung 8, 8a, 8b herum etwas konvex
nach außen wölben können. Diese konvexen Wölbungen sind
jedoch in den Figuren 14 bis 17 zur Verdeutlichung ihres
Sinnes stark übertrieben dargestellt worden. In der
Praxis sind sie wegen der geringen Filmdicke und der geringen
Höhe der Abstandshalter 8a, 8b kaum merkbar und beeinträchtigen die flache Ausgestaltung und Stapelbarkeit der
Taschen 1, 6 nicht. Die Führung 8, 8a, 8b, die ebenfalls aus
biegsamem Material besteht, bewirkt nun, daß beim Biegen
der Tasche 1 und Entnehmen des Filmstreifens 2 die Taschenflächen nicht zusammenschlagen können und daher der Film-

CW 2206.0/$^{I}$/$^{II}$/$^{III}$/$^{IV}$ PC

streifen 2 jederzeit in den durch die Führung 8, 8a, 8b offengehaltenen Filmkanal wieder zurückgeschoben werden kann. Die Taschenflächen können dabei die bereits beschriebe Querfalten 1b aufweisen.

Die Figuren 15 bis 17 zeigen ein anderes Ausführunge-beispiel für erfindungsgemäße Abstandshalter. Hierbei ist die Tasche 6 aus zwei elastischen, flachen Teilen 6i, 6k, zusammengesetzt, wobei das Teil 6k die Längskanten des Teiles 6i übergreift. Beide Teile 6i, 6k sind aus etwas elastischem Material. An das Teil 6i sind die Abstandshalter als Längsrippen 8a, 8b angeformt. Sie sind dabei schräg zueinander angeordnet, wobei ihr Abstand an der Anfor stelle größer als die Filmbreite und an ihren freien Enden kleiner als die Filmbreite ist. Sie bilden daher dreiecksförmige Führungsnuten 8d, 8e für den Filmstreifen 7. Um die Dehnbarkeit des Teils 6k quer zur Taschenlänge zu erhöhen, können stellenweise Längswellen 6 1 oder Längsfalten oder Längsrippen vorgesehen sein.

- 43 -

CW 2206.0/$^{I}$/$^{II}$/$^{III}$/$^{IV}$ PC

In Fig. 16 ist ein Schnitt durch eine Tasche nach Fig. 15 in der Nichtgebrauchs- oder Aufbewahrungsstellung gezeigt, wobei die Durchbiegungen stark übertrieben dargestellt sind. Dabei wird der Filmstreifen 7 in der Führungsnut 8d, 8e geführt, das Taschenteil 6i ist konvex nach außen durchgebogen. Die Abstandshalter 8a, 8b haben einen kleinen Abstand vom Taschenteil 6k, das sich in seiner zusammengezogenen Lage befindet. Wird die Tasche nach Fig. 15 bis 17 im Bogen in eine Kamera eingesetzt, wobei die Krümmungsmittelpunkte des Bogens unterhalb des Teiles 6k gedacht werden müssen, so verringert sich die Querwölbung des Taschenteils 6i, was zu einer Querdehnung des Taschenteils 6k führt, wie aus Fig. 17 ersichtlich ist. Dadurch können die Abstandshalter 8a, 8b zur Auflage an der Innenfläche des Taschenteils 6k. Zum Einschieben des Filmstreifens in dieser Gebrauchsstellung der Tasche bleibt somit der freie Kanal, der durch die Abstandshalter 8a, 8b und die durch sie geformten Längsnuten 8d, 8e gebildet wird.

Die verschiedenen Ausführungsformen von Filmtaschen, wie sie in Fig. 1 bis 6 sowie in Fig. 11 und 12 dargestellt sind, können mit Mitteln zur Gewährleistung eines freien Filmkanals entsprechend Fig. 14 oder entsprechend Fig. 15
bis 17 ausgestattet werden.

Selbstverständlich sind auch noch andere, in den Figuren
nicht gezeigte Ausführungsbeispiele der Taschen und ihrer
Einzelheiten sowie der zugehörigen Kameras möglich.
Insbesondere gibt es verschiedene Möglichkeiten für die
Herstellung der Taschen aus einem oder mehreren Teilen
sowie verschiedene Gestaltungsmöglichkeiten für
die Falten 1b, 6 1 oder Nuten 8c oder für die Ausgestaltung von Sperrzähnen 1h und Rasten 1i.

In den Kameras für die erfindungsgemäßen Kassetten können
praktisch alle bekannten Filmtransportmittel und Doppelbelichtungssperrgetriebe sowie Objektivtypen, Verschlußarten
und Belichtungssteuervorrichtungen Verwendung finden, wobei
an den Taschen auch mechanisch oder elektrisch abtastbare
Filmempfindlichkeitssteuermarken vorgesehen sein können.
Auch wäre es denkbar, die Tasche 1, 6 in mehreren Windungen
in eine Kamera einzusetzen, wobei deren Krümmungsradien
nicht zu klein sein dürfen. Insbesondere das den unbelichteter
Filmstreifen enthaltende Teil 6g der Tasche 6 könnte in

CW 2206.0/$^{I}$/$^{II}$/$^{III}$/$^{IV}$ PC

mehreren Windungen zur Verkleinerung der Kameramaße eingesetzt sein, da aus diesem der Filmstreifen 7 nur herausgezogen zu werden braucht und nicht eingeschoben werden muß.

Die Taschen 1,6 können an ihren Außenflächen auch Felder zur Aufzeichnung von zusätzlichen Informationen enthalten.

Die Filmkassetten nach den Figuren 18 bis 22 werden durch längliche, gegenüber ihrer Länge und Breite dünne Taschen 201, gebildet, die an ihrer Schmalseite eine Öffnung, vorzugsweise einen Schlitz 201a, zum Durchtritt des in ihnen befindlichen Filmstreifens 202 aufweisen. Der Filmstreifen ist etwas länger als die Tasche 201 und weist vorzugsweise je Bild ein Perforationsloch 202a längs einer seiner Längskanten auf. Um den im Inneren der Tasche 201 untergebrachten Filmstreifen 2 gegen unbeabsichtigten Lichteinfall zu schützen, ist der Schlitz 201a mit einem Lichtabdichtungsstreifen 201b, z. B. einem Filz- oder Plüschstreifen, ausgefüttert. Der zu seiner Erfassung aus der Tasche 201 vorstehende Filmanfang kann zur Beseitigung seiner Lichtleitfähigkeit gerastert und außerdem gegen unbeabsichtigtes Herausziehen, z. B. durch ein Klebeband 203, gesichert sein.

-46-

CW 2206.0/$^{I}$/$^{II}$/$^{III}$/$^{IV}$ PC

Um die Biegsamkeit einer Tasche 201 an den Stellen zu
erhöhen, an denen sie ggf. beim Einsetzen in eine Kamera
gekrümmt werden soll, weist jede Tasche an den entsprechenden
Stellen ihrer beiden Flachseiten Querrillen 201b auf,
zwischen denen keilförmige Rippen stehen bleiben.

Die Tasche 201 gemäß Fig. 18 ist einteilig aus lichtundurchlässigem, elastischem Kunststoff hergestellt. Sie weist
im Inneren einen Hohlraum zur Aufnahme des Filmstreifens 202
auf, der durch zwei symmetrisch zur Mittelebene der
Tasche 201 ausgebildete Führungsnuten 201d für die beiden
Ränder des Filmstreifens 202 und einen die beiden Nuten 201d
verbindenden Schlitz 201e größerer Breite gebildet wird,
so daß keine Verkratzungsgefahr für den Bildfeldbereich
des Filmstreifens 2 besteht.

Um nun zu erreichen, daß auch im gebogenen Zustand der
Tasche 201 in einer Kamera bei herausgezogenem Filmstreifen 202 die Führungsnuten 201d und der
Schlitz 201e als Hohlraum zum Wiedereinschieben des Filmstreifens 202 erhalten bleiben, sind die Tasche 201 bzw.
ihre Querrillen 201b so ausgebildet, daß der Bereich des
Hohlraums 201d, 201e, in dem sich der Filmstreifen 202 be-

CW 2206.0/$^{I}$/$^{II}$/$^{III}$/$^{IV}$ PC

findet bzw. in den er wieder eingeschoben werden muß,
etwa die sog. neutrale Faser X der Tasche 201 bei Biegungen
quer zur Längsrichtung bildet. Die Tasche 201 muß also
so ausgebildet sein, daß bei Biegung alle ihre Querrippen
zwischen den Querrillen 201b auf der einen Taschenflachseite sich zusammenschieben und auf der anderen Taschenflachseite auseinanderbiegen, ohne daß die gebogenen
Taschenflächen sich im Tascheninneren annähern bzw. berühren, wobei der Bereich um die Mittelebene des Hohlraums 201d,
201e trotz der Biegung der Tasche keine Längenänderung
erfährt. Dies wird nicht nur durch die bereits
beschriebene  trapezförmige oder keilförmige Ausbildung der
Querrillen 201b bzw. Querrippen erreicht, sondern bei der
Ausgestaltung nach Fig. 18 durch eine zu der Mittelebene des
Hohlraums 201d, 201e vorzugsweise symmetrische Ausbildung der
Querrillen 201b bzw. Querrippen beider Flachseiten der
Tasche 201.

Die Tasche 201 gemäß dem Ausführungsbeispiel nach den Figuren 19
und 20 ist ebenfalls aus lichtundurchlässigem, elastischem
Kunststoff, jedoch aus zwei spiegelbildlichen Halbschalen 201f,
201g hergestellt, die beispielsweise miteinander verschweißt
sind. Es wäre aber auch möglich, auch die Tasche nach diesem Ausführungsbeispiel einteilig herzustellen, da sie sich infolge der Elastizität des Kunststoffes trotz ihrer besonderen Ausgestaltung entformen ließe. Auch diese Tasche 201: 201g ist so ausgebildet, daß sie im Inneren einen Hohlraum für den Filmstreifen 202 aufweist, dessen Bereich um die Mittelebene als neutrale Faser für Biegungen quer zur Längsrichtung ausgebildet ist, in der der Filmstreifen 202 geführt wird. Hierzu sind auch bei dieser Ausgestaltung die Querrillen 201b auf beiden Flachseiten zur neutralen Faser symmetrisch ausgebildet, jedoch nicht durch Materialverdünnungen, sondern durch eine balgenartige Faltung erzeugt worden. Falls bei der Biegung der Tasche 201 beim Einlegen in eine Kamera eine geringfügige Wölbung um die Längsmittellinie einer Flachseite auftritt, ist es außerdem zweckmäßig, die balgenartige Faltung auch an den Längsschmalseiten der Tasche in Form von Falten 201h fortzusetzen.

Bei dieser Ausgestaltung weist das Filmmaul innerhalb des Schlitzes 201a eine Erweiterung und daran anschließend einen weiteren Durchtrittsschlitz 201: auf. In der Erweiterung und im äußeren Schlitz 201a ist der Lichtabdichtungsstreifen 201c angeordnet und befestigt. An den Lippen des inneren

CW 2206.0/I/II/III/IV PC

Schlitzes 201i sind zu beiden Seiten der Mittelebene des
Hohlraums Gleitbahnen 204, beispielsweise aus Papier oder
Metallblättern, befestigt, deren andere Enden bis über den
Bereich der Faltung 201b, 201h hinaus in das Innere der
Tasche 201f, 201g reichen und dort frei liegen. Ihre Breite
reicht zumindest über einen Teil der Breite des Filmstreifens 202. Beim Biegen der Tasche 201f, 201g quer zu
ihrer Längsrichtung schieben sich die Falten 201b der einen
Flachseite zusammen während sich die Falten der anderen
Flachseite dehnen. Das Ende der Gleitbahn 204 auf der
Seite der Mittelebene, auf der eine Dehnung der Falten 201b
erfolgt, bekommt einen größeren Abstand vom Taschenende,
als es in der ungebogenen Taschenlage einnimmt, das Ende
der anderen, den sich zusammenschiebenden Falten 201b benachbarten Gleitbahn 204 verschiebt sich aus seiner ungebogenen Stellung beim Biegen der Tasche etwas auf das Taschenende zu. Zwischen den Gleitbahnen 204 aber bleibt die Filmführungsbahn auch bei aus der Tasche 201 teilweise herausgezogenem Filmstreifen 202 für dessen Zurückführung frei.
Die Gleitbahnen 204 haben dabei die besondere Aufgabe, daß
der Filmstreifen 202 beim Zurückführen in die Tasche 201 durch
kameraseitige Filmtransportmittel nicht mit seinem in
der Tasche 201 befindlichen Ende an die Innenseite der Falten 201b stoßen und daran hängenbleiben kann. Würde
dies nicht verhindert, so könnte der Filmstreifen sich
beim Hängenbleiben an den Falten 201b gegen ein weiteres
Einschieben in die Tasche 201 sperren oder verbiegen und
Knicke erhalten.

Bei dem Ausführungsbeispiel nach Fig. 21 wird die Tasche
durch ein Kunststoffteil 201 gebildet, in das die Führungsbahn für den Filmstreifen 202 sowie die Querrillen oder
Falten 201b einer Flachseite angeformt sind. Die Tasche wird
dabei durch Aufkleben oder Anschweißen der anderen Flachseite 201i vervollständigt. Da diese aufzuklebende Flachseite 201i wesentlich dünner ist, liegt die die neutrale
Faser bildende Ebene, in der der Filmstreifen liegt, noch in
dem Taschenteil 201; sie ist strichpunktiert angedeutet.
Um der neutralen Faser X diese Lage zu geben, müssen Querrillen oder Falten 201k etwa symmetrisch zu den Rillen oder
Falten 201b an den Kanten des Taschenteils 201 vorgesehen
sein, auf die die Flachseite 201i aufgeklebt oder aufgeschweißt wird. Entsprechend muß aber auch die aufzuklebende
Flachseite 201i den Falten 201k entsprechende, in diese
eingreifende Wellen oder Falten 11 aufweisen.

CW 2206.0/I/II/III/IV PC

Gemäß dem Ausführungsbeispiel nach Fig. 22 ist in der
Tasche 201 ein Abstandshalter 208 vorgesehen, durch den
ein offener Filmkanal sichergestellt ist. Der Abstandshalter 208 besteht aus elastischem Material. Die neutrale
Faser X, die strichpunktiert gezeichnet ist, ist etwa in
den Bereich seiner Mittelebene gelegt. An den Stellen,
an denen die Tasche 201 in einer Kamera gebogen werden
soll, weisen seine den Taschenflachseiten zugewandten
Oberflächen zu seiner Mittelebene vorzugsweise symmetrische
Querrillen 208a auf. Die Tasche 201 selbst weist in diese
Querrillen 208a des Abstandshalters 208 eingreifende Querfalten 201b auf.

Selbstverständlich sind auch noch andere Ausführungsbeispiele
als die in den Figuren 18 bis 22 gezeigten möglich. So
könnten die Rillen oder Falten 201b auch unsymmetrisch zur
neutralen Faser X insofern ausgebildet sein, als sie zwar die
gleiche Tiefe und Profilform aufweisen, aber gegeneinander
versetzt sind. Auch wäre es möglich, daß die Profilform der
Falten oder Rillen in der einen Flachseite dreieckig und in
der anderen Flachseite trapezförmig ist. Sind beispielsweise Falten oder Nuten 201b nur in einer Taschenflachseite vorgesehen, so genügt es, wenn eine Gleitbahn 204 nur an der
dieser Flachseite benachbarten Lippe des Schlitzes 201a, 201i
vorgesehen ist. Auch die Ausbildung der Durchtrittsöffnung
für den Filmstreifen 202 als zwei hintereinanderliegende
Schlitze 201a, 201i ist nicht notwendig. Ist nur ein Durchtrittsschlitz 201a vorhanden, so könnte je eine Gleitbahn 204
zwischen einer Lippe des Schlitzes 201a und dem dieser Lippe
zugeordneten Lichtabdichtungsstreifen 201c befestigt sein,
wobei eine der Gleitbahnen auch mit ihrem in der Tasche
liegenden Ende an letzterer, z. B. am Taschenende, befestigt
sein könnte.

Allen Ausführungsbeispielen nach den Fig. 18 bis 22 ist gemeinsam, daß die Kassette 201 in ihrem Inneren einen den
Filmstreifen 202 aufnehmenden Hohlraum mit einem Bereich
aufweist, der bei Biegungen der Kassette 201 quer zu ihrer
Längsrichtung etwa eine neutrale Faser X bildet, der also
einen stets offenen Kanal zum Herausziehen und Wiedereinschieben des Filmstreifens 202 darstellt. Dabei bilden die
Querrillen oder Querfalten zusätzlich noch eine Verstärkung

der Taschenflachseiten, so daß diese sich bei Biegungen quer zur Längsrichtung nicht parallel zur Längsrichtung konkav verbiegen.

Auch gemäß den Ausführungsbeispielen nach den Fig. 23 bis 26 handelt es sich um eine Filmkassette für einen Filmstreifen 101, die durch eine lichtundurchlässige, flache Tasche von mindestens der Länge des Filmstreifens 101 gebildet wird und eine senkrecht zur Taschenlänge verlaufende schlitzartige Öffnung 102 zum Durchtreten des Filmstreifens 101 aufweist. Die Tasche weist im Innern einen Abstandshalter 103 auf zur Bildung eines freien Filmkanals für den Filmstreifen 101 im Tascheninneren.

Der Abstandshalter 103 nach den Fig. 23 bis 25 wird durch einen U-förmigen Rahmen gebildet, dessen freie Innenlänge mindestens gleich der Länge des innerhalb der Tasche befindlichen Stückes eines Filmstreifens 101 ist und dessen freie Breite etwa bzw. mindestens gleich der Breite des Filmstreifens 101 ist. Die Dicke des Rahmens 103 ist zumindest etwas größer als die Filmdicke. Die parallel zur Filmebene liegenden Oberflächen des U-förmigen Rahmens 103 sind eben ausgebildet. An der offenen Schmalseite des U-förmigen Trägers 103, der an der Schlitzseite der Tasche

CW 2206.0/I/II/III/IV PC

anzuordnen ist, können in nicht gezeigter Weise zwischen
seinen Schenkeln zwei einen Schlitz freilassende Lichtabdichtungsstreifen vorgesehen sein.

Gemäß den Figuren 23 bis 25 wird die Kassette bzw. Tasche
dadurch gebildet, daß das Taschenmaterial 104, z. B. lichtdichtes Allongenpapier oder eine lichtundurchlässige
Kunststoffolie auf die Flachseiten des Rahmens 103 aufgeklebt oder aufgeschweißt wird. Das Taschenmaterial 104
wird zweckmäßigerweise in Bahnen zugeführt, deren Breite der
Länge des Rahmens 103 entspricht. Es ist außerdem vorteilhaft, wenn die Bahnen in Stücke von der Länge der doppelten
Rahmenbreite zuzüglich der einfachen Rahmendicke unterteilbar
sind, z. B. durch Perforationsreihen 104a, so daß bei
Erreichen der Bearbeitungsstation einer Herstellungs- und
Konfektioniermaschine jeweils das benötigte Stück leicht
abgetrennt werden kann, z. B. durch Stanzen. Eine Abtrennung
ist aber ggf. auch ohne Perforation 104a möglich.

Eine Bahn des Taschenmaterials 104 wird gemäß Figur 23 in
ihrer Längsrichtung gemäß Pfeilrichtung 105 zugeführt. Dann wi
senkrecht hierzu in Pfeilrichtung 106 von oben, und zwar
mit seiner unteren Stirnkante und einer unteren Längskante

CU 2205.0/I/II/III/IV PC

bündig mit einer Längskante und der Stirnkante des
Materials 104 ein U-förmiger Rahmen 103 auf die Bahn 104
aufgeklebt oder aufgeschweißt und ein Stück des Taschenmaterials an der Perforation 104a abgetrennt. Schließlich
wird senkrecht zur Zuführrichtung 105 der Materialbahn 104
entweder schräg von oben oder in einer zur Materialbahn parallelen Ebene gemäß Pfeilrichtung 107 ein Filmstreifen 101 in den Rahmen 103 eingelegt derart, daß sein
Anfang nach Fertigstellung der Tasche durch die Lichtabdichtung des Schlitzes 102 aus der Tasche vorsteht, um
durch kameraseitige Filmtransportmittel erfaßt werden
zu können. Schließlich wird die Oberfläche des Rahmens 103
mit Klebestoff versehen und das noch freiliegende Ende des
abgetrennten Stückes des Taschenmaterials 104 über eine
Schmallängsseite des Rahmens 103 und dessen Oberfläche
geklappt und festgeklebt.

An die Stelle einer Verklebung kann auch eine Verschweißung
treten, die ggf. gleichzeitig von oben und unten erfolgen
kann. Sollte es die Wärmeeinwirkung bei Verschweißung
zweckmäßig erscheinen lassen, so kann der Filmstreifen 101
erst nach Fertigstellung der Tasche 103, 104 durch den

CW 2206.0 /I/II/III/IV

Schlitz 102 entgegen der Pfeilrichtung 107 in diese eingeführt werden. Schließlich wäre es auch möglich, zuerst die
Materialbahn 104 in Pfeilrichtung 105 und dann den Filmstreifen 101 in Pfeilrichtung 107 zuzuführen und erst am
Ende den Rahmen 103 ohne Lichtabdichtstreifen in Pfeilrichtung 106 von oben um den Filmstreifen 101 herum zu legen
und das Materialstück 104 zu verschweißen oder zu verkleben
und die Lichtabdichtung anzubringen.

Dieses zuletzt beschriebene Verfahren kann dann zweckmäßig
sein, wenn der Rahmen 103 nicht nur U-förmig ausgebildet ist,
sondern auch noch die eine Taschenflachseite 108 aufweist, vgl
Fig. 26. In diesem Falle muß der gesamte Schlitz 102 und
Führungskanal für den Filmstreifen 101 als Profilnut in den
Rahmenteil 103, 108 eingeformt sein. Die Materialbahn 104
muß demnach in Stücke aufgeteilt werden, deren Breite der
Länge des Rahmenteiles 103, 108 und deren Länge der Breite
des Rahmenteiles 103, 108 entspricht. Auch bei diesem Ausführungsbeispiel für ein Herstellungsverfahren einer
taschenartigen Filmkassette kann der Filmstreifen 101 ggf.
erst nach Fertigstellung der Tasche 104, 103, 108
durch den Schlitz 102 in diese eingebracht werden.

CW 2006.C/J,II,III,IV PG

In Figur 27 ist eine abgebrochen und nicht maßstäblich dargestellte, flache, längliche, taschenartige Filmkassette
mit 401 bezeichnet. Innerhalb der Tasche 401 ist ein Filmstreifen 402 angeordnet, dessen Länge so bemessen ist, daß
mehrere Aufnahmen der Länge nach auf ihn aufbelichtbar sind.
Die Tasche 401 ist im wesentlichen starr ausgebildet und
weist an ihrer Stirnseite einen Schlitz 401a zum Durchtritt
des Filmstreifens 402 auf. Der Schlitz 401a ist mit der
Lichtabdichtung, vorzugsweise Plüschstreifen 403, ausgefüttert,
zwischen denen der Filmstreifen 402 durchtreten kann, die
aber einen Lichteinfall ins Tascheninnere verhindern. In
einer Kassettenflachseite 401b ist nahe dem Anfang der Tasche 401,
also nahe dem Schlitz 401a ein Belichtungsfenster 401c vorgesehen, hinter dem die Schichtseite des Filmstreifens 402 liegt.
Das Belichtungsfenster 401c hat etwa die Größe einer Aufnahme,
d. h. es kann ein wenig kleiner oder größer sein als ein kameraseitiger Bildfensterausschnitt. Ist es kleiner, so wird durch
das taschenseitige Bildfenster 401c das Bildformat bestimmt;
ist es größer, so wird das Bildformat durch den kameraseitigen
Bildfensterausschnitt bestimmt. Das Belichtungsfenster 401c
kann so groß sein, daß die nicht gezeigte Filmtransport- und
Ablängperforation durch das Bildfenster zugleich zugänglich
ist, so daß z. B. ein Greifer von der Objektivseite her durch

- 59 -

CW 2206.0, I, II, III, R  PC

das Belichtungsfenster 401c den Filmstreifen um jeweils einen
Bildabschnitt bewegen kann. Es kann aber auch parallel zum
Belichtungsfenster 401c in der Flachseite 401b und ggf. auch
noch in der anderen Flachseite ein Filmtransportschlitz 401d
vorgesehen sein, durch den die kameraseitigen Filmtransportmittel mit der Filmperforation zusammenwirken können. Ein gesonderter Filmtransportschlitz 401d hat den Vorteil, daß das
taschenseitige Belichtungsfenster 401c das Bildformat auf
dem Filmstreifen 402 bestimmt und scharf begrenzt.

Das Belichtungsfenster 401c in einer Taschenflachseite 401b
hat den Vorteil, daß die Belichtung jeder Aufnahme in einer
Kamera durch dieses Bildfenster 401c erfolgt. Bei der Konfektionierung wird also der Filmstreifen 402 mit seinem ersten
Bildabschnitt in das Belichtungsfenster gebracht. Sein Anfang
muß nur wenige Millimeter vor dem Belichtungsfenster 401c im
Schlitz 401a bzw. zwischen den Lichtabdichtungsstreifen 403
liegen, ohne jedoch aus dem Schlitz 401a vorzustehen. Der
Filmstreifenanfang liegt also lichtdicht im Schlitz 401a.
Wird er in einer Kamera aus dem Schlitz 401a transportiert,
so kann er ohne weiteres aus der Tasche 401
herausgeschoben werden. Das gleiche gilt für das

Filmstreifenende. Es mit nur wenige Millimeter hinter dem letzten im Belichtungsfenster 401c liegenden Bildabschnitt liegen. Wird nach der Belichtung der Filmstreifen 402 durch die kameraseitiger Filmtransportmittel in die Tasche 401 zurückbewegt, so steht dem nichts hinderlich entgegen, weil das Filmstreifenende noch in der Tasche 401 verblieben ist. Dadurch, daß die Länge des Filmstreifens 402 als Folge seiner schrittweisen Belichtung durch das Belichtungsfenster 401c hindurch kaum größer zu sein braucht als die für die vorbestimmte Zahl von Aufnahmen erforderliche Länge, kann auch **die Taschenlänge gegenüber der Anordnung nach dem Hauptpatent kleiner gehalten werden. Die größere Filmstreifen- und Taschenlänge nach dem Hauptpatent ergab sich dadurch, daß ein größerer Filmvor- und nachspann erforderlich waren, weil einerseits der Filmstreifen vor der ersten Aufnahme bereits außerhalb des Taschenschlitzes 401a erfaßbar sein und transportiert werden mußte und andererseits nach der letzten Aufnahme noch ein ausreichendes Endstück in der Tasche verbleiben mußte, um einen reibungslosen Rücktransport durch den Schlitz 401a sicherzustellen. Das erfindungsgemäße Belichtungsfenster 401c in der Tasche 401 bringt also einen erheblichen Vorteil bezüglich Größe von Filmstreifen und Tasche bei gegebener Bildzahl.**

Um nun trotz des Belichtungsfensters 401c und ggf. des Transportschlitzes 401d alle Vorteile einer erfindungsgemäßen Kasette zu erhalten, muß ein Verschluß für das Belichtungsfenster 401c und ggf. den Transportschlitz 401d vorgesehen sein, der so ausgebildet ist, daß bei Verwendung einer Tasche 401 in einer zugeordneten Kamera der Verschluß ohne besondere zusätzliche Handgriffe zu öffnen und vor dem Entnehmen einer Tasche 401 wieder zu schließen ist.

Gemäß den Fig.27 und 29 bzw. 30 wird ein derartiger Verschluß durch einen außen über die Tasche 401 gesteckten Verschlußschieber 404 gebildet. Gemäß Fig.27 ist der Verschlußschieber 404 ein rechteckiger Rahmen mit einer inneren rechteckigen Ausnehmung, die dem Außenquerschnitt der Tasche 401 angepaßt. Der Verschlußschieber 404 kann innen zur Lichtabdichtung mit einem Plüschstreifen 405 ausgefüttert sein. Er kann zusätzlich oder statt dessen aus elastischem Material hergestellt und gegen die Tasche hin vorgespannt sein, so daß zwischen dem Verschluß- schieber 404 und der Tasche 401 ein Reibschluß besteht. Gemäß Fig. 1 weisen beide Flachseiten des Verschlußschiebers 404 eine bezüglich des kameraseitigen Bildfensterausschnitts konkave Wölbung auf. Es wäre aber auch möglich, beide Verschlußschie- berflachseiten zur Tasche 401 hin konvex durchzubiegen und da- bei vorzuspannen. Der Verschlußschieber 404 ist etwas länger als ds Bildfenster 401c und/oder der Transportschlitz 401d, so daß in der geschlossenen Stellung des Verschlußschiebers 404 beide Öffnungen 401c und 401d lichtdicht verschlossen sind.

Gemäß Fig. 27 sind am Anfang der Tasche 401 zwei in Richtung ihrer Breite vorstehende Vorsprünge 401e vorgesehen, die als Anschläge für den Verschlußschieber 404 in dessen die Öffnungen 401c, 401d abdeckender Lage dienen. Hierdurch wird verhindert, daß der Verschlußschieber 404 versehentlich von der Tasche 401 abgezogen werden kann. Entsprechende Anschläge könnten auch noch an der Tasche 401 für die geöffnete Stellung des Verschlußschiebers 404 vorgesehen sein, um ein versehentliches Abziehen des Verschlußschiebers über das Taschenende zu verhindern. Eine Sicherung in dieser Beziehung ist jedoch nicht so notwendig, weil das Taschenende wesentlich weiter entfernt liegt und außerdem an einer unbelichteten, unbenutzten Kassette gewöhnlich irgendwelche Verschlußmarken zur Kennzeichnung vorgesehen sind, die vor oder beim Einsetzen in eine Kamera aufge- brochen werden.

Wie den Fig. 27 bis 34 entnehmbar ist, ist der Verschlußschieber 404 so dimensioniert, daß er quer zur Taschenlänge an seinen Stirnseiten an mindestens je einer Stelle 404a über die entsprechenden Maße der Tasche 401 vorsteht, z. B. dicker als die Tasche 401 ist. An diesen vorspringenden und dadurch Mitnehmer 404a bildenden Stellen kann der Verschlußschieber 404 von kameraseitigen Mitnehmern in später zu beschreibender Weise erfaßt und in cie der geöffneten bzw. geschlossenen Stellung der Öff- nungen 401c, 401d entsprechende Lage mitgenommen werden.

In den Figuren 29 und 30 ist eine von der Ausführungsform nach
Fig.27 etwas abweichende Ausgestaltung einer erfindungsgemäßen
Kassette 401 , 404 gezeigt. Hier sind die Vorsprünge 401e entfallen. Dafür sind zwischen der Tasche 401 und dem Verschlußschieber 404 Federrasten 404b, 401f oder druckknopfartige Vorsprünge und Vertiefungen vorgesehen, die den Verschlußschieber
404 in seiner die Öffnungen 401c, 401d abdeckenden Stellung
lösbar verrasten. Außerdem ist hier der Verschlußschieber 404
nicht als geschlossener Bügel, sondern als an der der das Belichtungsfenster 401c aufweisenden Flachseite 401b gegenüberliegenden Flachseite offene Klammer ausgebildet. Die freien Enden der Klammer müssen naturgemäß so weit in die Flachseite
reichen, daß sie auch einen in dieser Flachseite vorgesehenen
taschenseitigen Transportschlitz lichtdicht verschließen. Die
Tasche 401 weist zweckmäßigerweise zwischen den freien Enden
der Klammer 404 einen mittleren Vorsprung 401g auf, dessen Kanten als Führung für den klammerartigen Verschlußschieber 404
dienen.

In den Figuren 28 und 31 sind Teile einer Kamera 406 gezeigt, die
zur Verwendung einer Kassette nach den Fig.27 oder 29 geeignet
ist. Dabei sind mit 406a ihr Objektiv, mit 406b ihre Bildbühne,
mit 406c der Kassettenraum bzw. Raum für eine Tasche 401, 404,
mit 406d eine Kassettenandruckplatte, mit 406e ein Deckel für
den Kassettenraum 406c und mit 406f ein Raum für den aus der
Tasche 401 in der Kamera 406 herausbewegten Filmstreifen 402
bezeichnet. Dabei kann der Filmstreifen 402
entweder vor der Belichtung in den Raum 406f transportiert werden und dann schrittweise nach einer Belichtung in die Tasche
401 zurückgeschoben werden oder nach jeweils der Belichtung einer Aufnahme in den Raum 406f transportiert und nach der Belichtung der letzten Aufnahme in einem Zuge in die Tasche zurückgeschoben werden. Hierzu kann jedes bekannte oder zukünftig
geeignete Filmtransportmittel mit Ablängvorrichtung Verwendung
finden.

Gemäß Fig.28 ist der Kassettenraum 406c als Schacht ausgebildet, in den die Tasche 401, 404 von einer Kameraschmalseite parallel zur Filmtransportrichtung eingeschoben wird. In Einschubrichtung hinter der Bildbühne 406b befindet sich ein Anschlag 406g für den Taschenanfang, damit das Bildfenster 401c
gegenüber der Bildbühne 406b die richtige Lage erhält. Der Kassettenraum 406c ist im Bereich der Bildbühne 406b so schmal,
daß der Verschlußschieber 404 nicht in die Bildbühne 406b geschoben werden kann, sondern nur die Tasche 401 selbst. Dementsprechend ist der Kassettenschacht 406c vor der Bildbühne 406b
so breit, daß die Tasche 401 mit Verschlußschieber 404 einschiebbar ist, und wird unmittelbar vor der Bildbühne 406b
durch Mitnehmer 406h verengt. Die Mitnehmer 406h sind mit
Lichtdichtungsstreifen 406i belegt. Wird nun eine Kassette 401,
404 mit verschlossenem Belichtungsfenster 401c in den Schacht
406c parallel zur Filmtransportrichtung eingeschoben, so bleiben die verschlußseitigen Mitnehmer 404a an den schachtseitigen
Mitnehmern 406h hängen, so daß der Verschlußschieber 404 beim
Einschieben des Taschenanfangs bis zu den Anschlägen 406g zurückgehalten wird. Hierdurch werden das Belichtungsfenster 401c
und der Transportschlitz 401d geöffnet, so daß nun eine Belichtung der einzelnen Aufnahmen durch das Belichtungsfenster hindurch möglich ist. Dabei bleibt auf alle Fälle der letzte Bildabschnitt auf dem Filmstreifen 402 im Bildfenster 401c stehen,
gleich ob die Belichtung beim Transport des Filmstreifens aus
der Tasche oder zurück in die Tasche erfolgt. Da außerdem die
Tasche 401 ungeknickt oder ungebogen in der Kamera liegt und
eine erhebliche Steifigkeit aufweist, läßt sich der Filmstreifen ohne Schwierigkeit oder Störungen in die Tasche 401 zurücktransportieren.

Um nun nach der Belichtung des Filmstreifens beim Entnehmen der
Tasche 401 den Verschlußschieber 404 wieder in seine die Öffnungen 401c, 401d abdeckende Lage zu bewegen, ragt ein Mitnehmerhebel 407 unter der Wirkung einer Feder 408 in den Kassettenschacht 406c. Er ist so angeordnet, daß er in Tascheneinsschubrichtung mit einer längeren Schrägfläche 407a und in Entnahmerichtung mit einer kurzen Schrägfläche 407b in den Bewegungsweg des Verschlußschiebers 404 ragt. Beim Einschieben der
Tasche 401 kann die Haltekraft zwischen Tasche 401 und Ver-

schlußschieber 404 die Kraft des Mitnehmerhebels 407 überwinden
und ihn an der langen Schrägfläche 407a aus dem Bewegungsweg
des Verschlußschiebers 404 schwenken. Bei der Entnahme der
Tasche 401 jedoch sind die Kräfteverhältnisse infolge der kurzen, steilen Schrägfläche 407b verändert. Die steile Schrägfläche 407b schiebt daher den Verschlußschieber 404 wieder über
das Belichtungsfenster 401c und den Transportschlitz 401d.
Nachdem dieser wieder seine End- oder Raststellungen an der
Tasche 401 erreicht hat, reichen diese Kraft und die Entnahmekraft für die Tasche aus der Kamera aus, um den Mitnehmerhebel
407 auch bei der Entnahme der Tasche schließlich aus dem Bewegungsweg des Verschlußschiebers 404 wegzudrücken.

Bei der Kamera gemäß den Figuren 31 und 32 ist der Deckel 409 als
Rückdeckel ausgebildet, welcher die Bildbühne 406b der Kamera
406 freigibt. Er ist als parallel zur Filmtransportrichtung in
Nuten 406k geführter Schieber 409 ausgebildet, der einen
schwenkbar angelenkten Teil 409a trägt. An dem schwenkbaren
Deckelteil 409a sind im Abstand der Länge des Verschlußschiebers 404 zwei Mitnehmer 409b vorgesehen. Die Bildbühne 406b
weist eine Vertiefung von der doppelten Länge des Verschlußschiebers 404 auf.

Zum Öffnen der Kamera 406 nach den Figuren 31 und 32 wird der
Deckel 409 in Richtung des Pfeiles 410 in den Nuten 406k verschoben, so daß das freie Ende des schwenkbaren Deckelteils
409a freigegeben wird, vgl. Fig. 31. In dieser Stellung wird der
schwenkbare Deckelteil 409a in seine strichpunktiert gezeichnete Offenstellung geschwenkt. Dann wird unter Einschieben des
Kassettenendes in den Schacht 406c die verschlossene Tasche 401
in die Bildbühne 406b eingelegt. Beim Schließen des schwenkbaren Deckelteils 409a greifen dessen Mitnehmer 409b beiderseits
außerhalb der Mitnehmer 404a an. Wird nun der Deckel 409 zum
Verriegeln entgegen Richtung des Pfeiles 410 in den Nuten 406k
in die Stellung nach Fig. 32 verschoben, so nehmen die deckelseitigen Mitnehmer 409b die verschlußschieberseitigen Mitnehmer
404a mit, so daß in der verriegelten Stellung des Deckels 409
gemäß Fig. 32 der Verschlußschieber 404 das Belichtungsfenster

## - 64 -

der Tasche 401 freigibt. Umgekehrt nehmen die Mitnehmer 405b beim Verschieben des Deckels in Pfeilrichtung 410 den Verschlußschieber 404 in die das Belichtungsfenster der Tasche 401 wieder verschließende Stellung mit. Das Öffnen und Schließen des taschenseitigen Belichtungsfensters 401c, 401d ist hier also mit dem Öffnen und Schließen bzw. Verriegeln und Entriegeln des Kameradeckels gekoppelt.

An die Stelle eines verschieb- und schwenkbaren Deckels 409 könnte naturgemäß ein nur verschiebbarer Deckel treten. Hierbei müßten jedoch die deckelseitigen Mitnehmer analog zum Mitnehmerhebel 407 nach Fig.28 ausgebildet werden.

Die Ausführungsbeispiele für Kassette und Kamera nach den Figuren 33 und 34 unterscheiden sich von denjenigen nach den Figuren 27 und 28 nur dadurch, daß eine Tasche 401 entsprechend den Figuren 11 und 12            mit einem etwa in der Taschenmitte gelegenen Belichtungsfenster 401c verwendet wird. Dementsprechend  liegt der unbelichtete Filmstreifen in der einen Taschenhälfte und wird nach der Belichtung durch das Belichtungsfenster 401c in die andere Taschenhälfte transportiert. An der Tasche 401 muß hierbei ein Anschlag 401h für den Verschlußschieber 404 vorgesehen sein, der dessen Verschiebung entgegen seiner Öffnungsrichtung verhindert. Auch die Kamera 406 nach Fig. 34 für eine Tasche nach Fig. 33 unterscheidet sich von der Kamera nach Fig. 28 nur dadurch, daß an die Stelle eines Speicherraums 406f ein Kassettenraum 406l für den zur Aufnahme des belichteten Filmstreifens dienenden Taschenteil tritt. Auch die Ausgestaltungen nach den Figuren 33 und 34 bringen den Vorteil gegenüber dem entsprechenden Ausführungsbeispiel nach dem Hauptpatent, daß Filmstreifen und Tasche bei gleichbleibender Bildzahl und gleichbleibendem Aufnahmeformat kürzer werden können, weil ein im taschenseitigen Bildfenster liegender Filmvor- und -nachspann entfallen.

Die Kassettenausführungsbeispiele nach den Figuren 35 bis 37 unterscheiden sich von denjenigen nach den Figuren 27, 29 und 33 dadurch, daß der Verschluß für das taschenseitige Belichtungs-

fenster 401c und/oder den Transportschlitz 401d als zwischen
Taschenfläche 401b und Filmstreifen 402 bewegbares Teil 411
ausgebildet ist. Gemäß dem Ausführungsbeispiel nach den Figuren
35 und 36 ist der Verschluß 411 als in Filmtransportrichtung in
einer Nut 401i im Tascheninneren geführter Schieber ausgestaltet, wobei ein Mitnehmer 411a durch das Belichtungsfenster 401c
über die Taschenoberfläche ragt und beispielsweise durch die
Mitnehmer 406h, 407 der Kamera nach Fig. 28 in die die Belichtungsöffnung 401c freigebende bzw. verschließende Stellung des
Verschlußschiebers 411 bewegbar ist.

Entsprechend Fig. 37 wird der Verschluß 411 zwischen Taschenfläche 401b und Filmstreifen durch eine um eine Achse 401k
drehbare Lamelle 411 gebildet. Ist hierbei das Belichtungsfenster 401c etwa quadratisch, so kann die Lamelle 411 im wesentlichen kreisförmig ausgebildet sein. Es kann aber auch
zweckmäßig sein, daß sie gemäß Fig. 37 von der Kreisform abweichende vorstehende Lappen aufweist. Auch in diesem Falle
ragt der verschlußseitige Mitnehmer 411a durch das Belichtungsfenster 401c über die Taschenoberfläche heraus. Damit die Lamelle 411 in eine die Belichtungsöffnung 401c vollständig freigebende, strichpunktierte Lage bewegbar ist, schließt sich an
die Belichtungsöffnung 401c in Richtung der Öffnungsbewegung
des Mitnehmers 411a ein zur Achse 401k konzentrischer schlitzförmiger Bogen 401l an, in den sich der Mitnehmer 411a in der
geöffneten Stellung der Lamelle 411 hineinbewegt. Naturgemäß
hat die Lamelle 411 eine derartige Form, daß der Schlitz 401l
in der Offen- und Schließstellung der Lamelle 411 abgedeckt ist.

Selbstverständlich sind noch andere der Einfachheit halber
nicht gezeigte Ausführungsbeispiele möglich. So könnte anstelle
einer Verschlußlamelle 411 für die Tasche 401 auch ein Zweilamellenverschluß oder ein anderer bekannter Verschlußtyp für
Kassetten Verwendung finden, sofern er durch kameraseitige Mitnehmer in seine Offen- und Schließstellung bewegbar ist. Naturgemäß ist bei Ausführungsbeispielen für Kameras, die demjenigen
nach Fig. 2 etwa entsprechen, dafür Sorge zu tragen, daß an der
Stelle der Mitnehmer 406h zum Öffnen des taschenseitigen Ver-

schlusses Lichtabdichtungen 406i so angebracht sind, daß das bildbühnenseitig dahinter liegende, geöffnete Belichtungsfenster 401c auch bei geöffnetem Deckel 406e kein Licht erhält.


Hierzu 15 Blatt Zeichnungen

0014309

CARLSRUHER KÜNCHEN
PATENTABTEILUNG

12. Januar 1979
10-hie-eh-ro
GW 2206.0/$^I$/$^{II}$/$^{III}$/$^{IV}$ BC

Ansprüche

1. Filmkassette für einen für die Aufnahme mehrerer Bilder
geeigneten, lichtempfindlichen Filmstreifen, dadurch gekennzeichnet, daß sie durch eine lichtundurchlässige, flache
Tasche (1, 6) von mindestens der Länge des Filmstreifens (2)
gebildet wird, die mindestens eine senkrecht zur Taschenlänge verlaufende Öffnung (1a; 6b) zum Durchtreten des
Filmstreifens (2, 7) aufweist.

2. Filmkasette nach Anspruch 1, dadurch gekennzeichnet, daß
die Tasche (1) biegsam ist.

3. Filmkassette nach Anspruch 1 oder 2, dadurch gekennzeichnet,
daß die Tasche (1) quer zu ihrer Länge verlaufende Rillen
oder Falten (1b, 6h) aufweist.

34 2232.0/I,II,III,IV bc

4. Filmkassette für einen Filmstreifen nach einem der vorhergehenden Ansprüche, dadurch gekennzeichnet, daß in der Tasche (1;6) Abstandshalter (8a, 8b) vorgesehen sind zur Bildung eines freien Filmkanals in der Tasche (1, 6).

5. Filmkassette nach einem der vorhergehenden Ansprüche, dadurch gekennzeichnet, daß die Abstandshalter (8a, 8b) seitlich der Transportbahn für den Filmstreifen (2; 7) liegen.

6. Filmkassette nach einem der vorhergehenden Ansprüche, dadurch gekennzeichnet, daß die Abstandshalter (8a, 8b) als seitliche Bahnbegrenzungen für den Filmstreifen (2; 7) ausgebildet sind.

7. Filmkassette nach einem der vorhergehenden Ansprüche, dadurch gekennzeichnet, daß die Abstandshalter (8a, 8b) durch einen Einsatz gebildet sind, der in die Tasche (1, 6) eingesetzt ist.

8. Filmkassette nach einem der vorhergehenden Ansprüche, dadurch gekennzeichnet, daß die Abstandshalter (8a, 8b) durch eine parallel zur Flachseite des Filmstreifens (2) verlaufende Führungsbahn (8) miteinander verbunden und als

Cw 2206.0/$^{I}$/$^{II}$/$^{III}$/$^{IV}$ PC

Einheit in die Tasche (1) eingesetzt, vorzugsweise mit ihren Enden verbunden sind.

9. Filmkassette nach einem der vorhergehenden Ansprüche, dadurch gekennzeichnet, daß längs der Abstandshalter (8a, 8b) Nuten (8c) vorgesehen sind zur Erhöhung ihrer Biegefähigkeit beim Einsetzen der Kassette in eine Kamera.

10. Filmkassette nach einem der vorhergehenden Ansprüche, dadurch gekennzeichnet, daß die Nuten (8c) trapez- oder dreiecksförmig ausgebildet sind.

11. Filmkassette nach einem der vorhergehenden Ansprüche, dadurch gekennzeichnet, daß die Abstandshalter (8a, 8b) an der Innenfläche einer Taschenflachseite (6i) angebracht, vorzugsweise aus Kunststoff angeformt sind.

12. Filmkassette nach einem der vorhergehenden Ansprüche, dadurch gekennzeichnet, daß der größte Abstand der Abstandshalter (8a, 8b) größer als die Filmbreite ist, daß sie schräg aufeinander zu verlaufen und daß ihr kleinster Abstand kleiner als die Filmbreite ist, so daß sie längs der Filmkanten verlaufende, etwa dreieckige Filmführungsnuten (8d, 8e) bilden.

CW 2206.0/$^{I}$/$^{II}$/$^{III}$/$^{IV}$ PC

13. Filmkassette nach Anspruch 9 oder 10, dadurch gekennzeichnet, daß an der der die Nuten oder Falten (201b)
aufweisenden Flachseite benachbarten Lippe der Öffnung (201a,
201i) eine zumindest über einen Teil der Breite des Filmstreifens (202) und über den Bereich der Nuten oder Falten
(201b) in Längsrichtung reichende Gleitbahn (204) angeordnet ist, deren Ende frei im Tascheninneren liegt.

14. Filmkassette nach Anspruch 13, dadurch gekennzeichnet, daß
an beiden Flachseiten Nuten oder Falten (201b) vorgesehen
und an beiden in Längsrichtung der Öffnung (201a, 201i) verlaufenden Lippen derselben Gleitbahnen (204) befestigt sind.

15. Filmkassette nach Anspruch 1 oder einem anderen der vorhergehenden Ansprüche, dadurch gekennzeichnet, daß der im
Inneren der Tasche (201) bestehende Hohlraum für den Filmstreifen mindestens in dem für dessen Unterbringung vorgesehenen Bereich annähernd die neutrale Faser (X) bei Biegung
der Tasche (201) quer zu ihrer Längsrichtung darstellt.

16. Filmkassette nach Anspruch 15, dadurch gekennzeichnet, daß
die Flachseiten der Tasche (201f, 201g) beiderseits der
neutralen Faser (X) eine balgenartige Faltung (201b) aufweisen.

17. Filmkassette nach Anspruch 16, dadurch gekennzeichnet, daß
die balgenartige Faltung (201h) auch an den Längsschmalseiten der Tasche (201f, 201g) vorgesehen ist.

CW 2206.0/I/II/III/IV PC

18. Filmkassette nach einem der vorhergehenden Ansprüche, dadurch gekennzeichnet, daß an den Längskanten der Öffnung (201i) zum Durchtritt des Filmstreifens (202) zumindest über einen Teil der Breite des Filmstreifens (20) und über den Bereich der Faltung (201b, 201h) in Längsrichtung der Tasche (201f, 201g) reichende Gleitbahnen (204) zu beiden Seiten der neutralen Faser (X) angeordnet sind, deren Enden frei im Tascheninneren liegen.

19. Filmkassette nach einem der vorhergehenden Ansprüche, dadurch gekennzeichnet, daß die Taschenwände (6i, 6k) schwach nach außen durchwölbbar oder durchgewölbt sind.

20. Filmkassette nach einem der vorhergehenden Ansprüche, dadurch gekennzeichnet, daß eine Taschenwand (6i) quer zur Längsrichtung stärker nach außen durchgewölbt ist als die andere Taschenwand (6k) und letztere quer zur Längsrichtung dehnbar ist.

21. Filmkassette nach einem der vorhergehenden Ansprüche, dadurch gekennzeichnet, daß die Öffnung (1a) der Tasche (1) durch einen den Taschenrand umgreifenden, biegesteifen Bügel (5) gegen Aufklaffen gesichert ist.

22. Filmkassette nach einem der vorhergehenden Ansprüche, dadurch gekennzeichnet, daß der Rand (1k) der Öffnung (1a) durch lichtdicht am Filmanfang (2b) anliegende Lippen gebildet wird, die durch den Bügel (5) zusammgenhalten werden.

CW 2206.0/<sup>I</sup>/<sup>II</sup>/<sup>III</sup>/<sup>IV</sup> PC

23. Filmkassette nach einem der vorhergehenden Ansprüche,
dadurch gekennzeichnet, daß in der Öffnung (1a) an sich
bekannte Lichtabdichtungsstreifen (1c), vorzugsweise
dünne Plüschstreifen, angeordnet sind.

24. Filmkassette nach einem der vorhergehenden Ansprüche,
dadurch gekennzeichnet, daß der aus der Öffnung (1a)
vorstehende Anfang (2b) des Filmstreifens (2) bzw.
dessen Vorspann lichtundurchlässig ist und vorzugsweise ein Filmtransportperforationsloch (2a) aufweist.

25. Filmkassette nach einem der vorhergehenden Ansprüche,
dadurch gekennzeichnet, daß die Öffnung (1a) der Tasche (1)
durch eine lichtdichte Verschlußkappe (3) verschließbar
ist, die am Filmanfang (2b) oder an einem Filmvorspann
befestigt ist.

26. Filmkassette nach Anspruch 25,
dadurch gekennzeichnet, daß die Verschlußkappe (3) an
ihren Schmalseiten zusammendrückbar, vorzugsweise an
Faltstellen (3e) zusammenfaltbar ist.

27. Filmkassette nach Anspruch 25,
dadurch gekennzeichnet, daß die Verschlußkappe (3) mit
lichtabdichtenden Mitteln versehen ist.

28. Filmkassette nach Anspruch 25,
dadurch gekennzeichnet, daß an der Verschlußkappe (3)
ein den Rand der Öffnung (1a) übergreifendes Labyrinth (3b,
1d) vorgesehen ist.

29. Filmkassette nach Anspruch 25,
dadurch gekennzeichnet, daß am Innenrand der Verschlußkappe (3) ein gegen die Tasche (1) abgeschrägter Lichtabdichtungsstreifen (3c) vorgesehen ist.

30. Filmkassette nach einem der vorhergehenden Ansprüche,
dadurch gekennzeichnet, daß der Filmstreifen (2) und/oder
die Verschlußkappe (3) gegen unbeabsichtigtes Herausziehen aus der Tasche (1) gesichert ist.

31. Filmkassette nach Anspruch 30,
dadurch gekennzeichnet, daß die Sicherung durch einen
Klemmsitz der Kappe (3) auf der Tasche (1) gebildet ist.

32. Filmkassette nach Anspruch 30,
dadurch gekennzeichnet, daß die Sicherung durch einen
den Filmanfang (2b) bzw. die Kappe (3) übergreifenden
Klebestreifen (4), vorzugsweise mit Sollreißstelle (4a)
gebildet wird.

CW 2206.0/I/II/III/IV FS

33. Filmkassette nach Anspruch 30, dadurch gekennzeichnet, daß die Sicherung durch eine oder mehrere Rasten (1i, 3i bzw. 1a, 3b) gebildet wird und daß jeweils eine Raste (1i) der Tasche (1) in eine Ausnehmung (3i) der Kappe (3) eingreift und durch einen kameraseitigen Dorn oder einen Zahn eines Filmtransportmittels aus der Ausnehmung (3f) drückbar ist.

34. Filmkassette nach einem der vorhergehenden Ansprüche, dadurch gekennzeichnet, daß am Filmanfang (2a) bzw. an der Verschlußkappe (3) Mittel (2a, 3d), vorzugsweise mindestens Perforationsloch, zu ihrem mechanischen bzw. automatischen Erfassen bzw. Abziehen von der Tasche (1) vorgesehen sind.

35. Filmkassette nach einem der vorhergehenden Ansprüche, dadurch gekennzeichnet, daß das Loch (2a, 3d) zum Bewegen des Filmanfangs (2a) bzw. der Verschlußkappe (3) durch kameraseitige Filmtransport oder -ablängmittel bezüglich Lage und Abstand eine Fortsetzung der Filmablänperforationslöcher (2a) des Filmstreifens (2) bildet.

CW 2206.0/I/II/III/IV

36. Filmkassette nach einem der vorhergehenden Ansprüche,
dadurch gekennzeichnet, daß einander zugeordnete
Mittel (1h, 2d; 2c, 1c) in der Tasche (1) nahe der
Öffnung (1a) und am in der Tasche (1) liegenden,
hinteren Ende des Filmstreifens (2) vorgesehen sind,
die beim Herausziehen des Filmstreifens (2) aus der
Tasche in Eingriff kommen und das Herausziehen dieses
hinteren Endes des Filmstreifens (2) aus der Tasche (1)
verhindern.

37. Filmkassette nach Anspruch 36,
dadurch gekennzeichnet, daß die Mittel aus einer Nocke (2c)
am hinteren Filmende gebildet werden, die breiter als
die Öffnung (1a, 1c) ist.

38. Filmkassette nach Anspruch 36,
dadurch gekennzeichnet, daß die Mittel aus mindestens
einer außerhalb der Filmablängperforation (2a) liegenden
Ausnehmung (2d) am hinteren Filmende und mindestens einem
zugeordneten Sperrzahn (1h) bestehen, der eine steile
Flanke entgegen der Ausziehrichtung und eine daran anschließende Schrägfläche aufweist, die ein Herausziehen
und Einschieben des Filmstreifens aus der und in die
Tasche (1) zulassen.

39. Filmkassette nach einem der vorhergehenden Ansprüche, dadurch gekennzeichnet, daß die Tasche (6) etwa die doppelte Länge des Filmstreifens (7) und etwa in der Mitte mindestens einer ihrer Flachseiten ein Belichtungsfenster (6a) aufweist, dessen vom Filmstreifen (7) zu durchsetzende Öffnungsschlitze (6b) durch Lichtabdichtungsmittel lichtdicht gegen das Tascheninnere ausgebildet sind.

40. Filmkassette und Filmstreifen nach Anspruch 39, dadurch gekennzeichnet, daß der Filmstreifen (7) zur Belichtung der einzelnen Aufnahmen schrittweise von der einen Seite (6g) der Tasche am Belichtungsfenster (6a) vorbei in die andere Seite (6f) der Tasche bewegbar ist und einen Vor- bzw. Nachspann (7a, 7c) aufweist, der vor bzw. nach der Belichtung des gesamten Filmstreifens (7) im Belichtungsfenster (6a) angeordnet ist.

41. Filmkassette nach einem der Ansprüche 39 oder 40, dadurch gekennzeichnet, daß sie in der Nähe des Belichtungsfensters (6a), vorzugsweise beiderseits hiervon, Faltstellen (6d, 6e) zum wahlweisen Knicken aufweist.

- ll -

CW 22C6.0/$^{I}$/$^{II}$/$^{III}$/$^{IV}$ PC

42. Filmkassette und Filmstreifen nach

Anspruch 40,            dadurch gekennzeichnet, daß der Filmvor- und nachspann (7a, 7c) und der Filmstreifen  (7) eine fortlaufende Filmabläng- oder Filmtransportperforation (7b) aufweisen.

43. Filmkassette nach einem der vorhergehenden Ansprüche, dadurch gekennzeichnet, daß vorzugsweise an ihrem geschlossenen Ende Mittel zu ihrer Befestigung in einer Kamera vorgesehen sind.

44. Filmkassette nach  Anspruch 43,

dadurch gekennzeichnet, daß die Befestigungsmittel durch eine mit einer kameraseitigen Raste (10d, 101) zusammenwirkende Ausnehmung (1d, 11) gebildet sind.

45. Filmkassette nach  Anspruch 43,

dadurch gekennzeichnet, daß die Mittel durch eine Einhängeöse (1e) gebildet werden.

46. Filmkassette nach  Anspruch 43,

dadurch gekennzeichnet, daß die Mittel durch eine in eine kameraseitige Nut oder Klemmleiste (36) einschiebbare Verdickung (1f) gebildet werden.

CW 2206.0/$^I$/$^{II}$/$^{III}$/$^{IV}$ PC

47. Fotografische Kamera zur Verwendung einer Filmkassette mit Filmstreifen nach einem der vorhergehenden Ansprüche, dadurch gekennzeichnet, daß sie einen langgezogenen Kassettenraum (16) zur Unterbringung der Tasche (1) und einen Raum (15) zum Speichern des aus der Tasche (1) herausgezogenen Filmstreifens (2) und Filmtransportmittel zum Transport des Filmstreifens aus der Tasche (1) heraus und zurück in die Tasche (1) aufweist.

48. Fotografische Kamera mit einem Objektiv und einem Bildfenster nach einem der vorhergehenden Ansprüche, dadurch gekennzeichnet, daß der Kassettenraum (16) für die Tasche (1) auf der einen Seite des Bildfensters (14) und der Speicherraum (15) für den Film auf der anderen Seite des Bildfensters (14) vorgesehen ist.

49. Fotografische Kamera nach einem der vorhergehenden Ansprüche, dadurch gekennzeichnet, daß der Kassettenraum (16) bogenförmig ist.

50. Fotografische Kamera nach einem der vorhergehenden Ansprüche, dadurch gekennzeichnet, daß Führungsmittel (18 zum Halten der Tasche (1) in ihrer gebogenen oder gewundenen Lage vorgesehen sind.

51. Fotografische Kamera nach einem der vorhergehenden Ansprüche, dadurch gekennzeichnet, daß der Kassettenraum (16) einen Schacht (16a) aufweist, in welchen die Tasche (1) in Längsrichtung teilweise einsteckbar ist.

52. Fotografische Kamera nach einem der vorhergehenden Ansprüche, dadurch gekennzeichnet, daß der Schacht (16a) zur Aufnahme des geschlossenen Endes der Tasche (1) bestimmt ist.

53. Fotografische Kamera nach einem der vorhergehenden Ansprüche, dadurch gekennzeichnet, daß im Schacht (16a) Mittel, vorzugsweise Klemmfedern (10e), zum Festhalten der eingesteckten Tasche (1) angeordnet sind.

54. Fotografische Kamera für eine Filmkassette nach einem der vorhergehenden Ansprüche, dadurch gekennzeichnet, daß Mittel (1d, 10d; 11, 101) zum Festlegen der Tasche (1) im Kassettenraum (16) vorgesehen sind.

CW 2206.C/$^I$/$^{II}$/$^{III}$/$^{IV}$ PC

55. Fotografische Kamera nach Anspruch 54,

dadurch gekennzeichnet, daß ein Haken (42) zum Einhängen der Öse (1e) oder eine Nut (36) zum Einschieben der Verdickung (1f) oder eine Nocke

oder Rast (10d, 10l) zum Eingreifen in eine Nut (1d, 1

der Tasche (1) vorgesehen sind.

56. Fotografische Kamera nach einem der vorhergehenden Ansprüche, dadurch gekennzeichnet, daß mit Transportmitteln zum Bewegen des Filmstreifens in den Speicherraum (15) Mittel zum Erfassen oder Befestigen und Bewegen des Filmanfangs (2b) bzw. der Verschlußkappe (

der Tasche (1) verbunden sind.

57. Fotografische Kamera nach einem der vorhergehenden Ansprüche, dadurch gekennzeichnet, daß die Mittel zum Erfassen und Bewegen des Filmanfangs (2b) bzw. der Ver schlußkappe (3) ein Haken (38a) zum Einhängen in ein Loch (2a, 3d) des Filmanfangs (2b) bzw. der Verschlußkappe (3) sind.

58. Fotografische Kamera nach einer der vorhergehenden

Ansprüche, dadurch gekennzeichnet, daß die Mittel zum

CW 2206.0/$^{I}$/$^{II}$/$^{III}$/$^{IV}$ PC

Erfassen und Bewegen des Filmanfangs bzw. der Verschlußkappe (3) in deren Perforation (2a, 3d) eingreifende Filmtransportmittel (19) sind.

59. Fotografische Kamera nach einem der vorhergehenden Ansprüche,
dadurch gekennzeichnet, daß die Filmtransportmittel zum Bewegen des Filmstreifens (2) in den Speicherraum (15) Mittel
zum Drehen einer im Speicherraum vorgesehenen Filmspule (3)
sind, mit der die Verschlußkappe (3) der Tasche (1) verbindbar ist.

60. Fotografische Kamera nach einem der vorhergehenden
Ansprüche, dadurch gekennzeichnet, daß die Filmtransportmittel zum Bewegen des Filmstreifens in den Speicherraum (15) durch einen Filmtransportgreifer oder ein
Perforrad (19) gebildet werden.

61. Fotografische Kamera nach einem der vorhergehenden
Ansprüche, dadurch gekennzeichnet, daß die Filmtransportmittel zum Bewegen des im Speicherraum (15) befindlichen
Filmstreifens zurück in die Tasche (1) ebenfalls durch
einen Filmtransportgreifer (39a) oder ein Perforrad (19)
gebildet werden.

62. Fotografische Kamera nach einem der vorhergehenden Ansprüche dadurch gekennzeichnet, daß mit dem Perforrad (19) oder seiner Transporthandhabe (46) ein Federwerk (4) verbunden ist, das bei Betätigung des Perforrades (19) zur Bewegung des Filmstreifens (2) in den Speicherraum (15) spannbar ist und bei Freigabe eines Verschlußauslösers (51) zum Ablauf um einen einem Bildschritt entsprechenden Betrag in der der Einschubrichtung des Filmstreifens (2) in die Tasche (1) entsprechenden Richtung freisetzbar ist.

63. Fotografische Kamera nach Anspruch 62, dadurch gekennzeichnet, daß für das Perforrad (19), das Federwerk (4) oder deren Transporthandhabe (46) Anschläge(49, 50) vorgesehen sind zur Begrenzung von deren Betätigungsweg und damit der in einer Richtung zu transportierenden Filmläng

64. Fotografische Kamera nach einem der vorhergehenden Ansprüche, dadurch gekennzeichnet, daß mit dem Perforrad (19) oder seiner Transporthandhabe (20) eine Bildzählscheibe (20a) zusammenwirkt oder verbunden ist.

65. Verfahren unter Verwendung einer Filmkassette mit einem Filmstreifen nach einem der vorhergehenden Ansprüche, dadurch gekennzeichnet, daß die Tasche (1) vorzugsweise in mindestens einer Schleife in den Kassettenraum der Kamera (10) eingelegt und darin befestigt wird, daß der Filmanfang (2b) bzw. die Verschlußkappe der Tasche (1) mit den Filmtransport-

CW 2206.0/<sup>I</sup>/<sup>II</sup>/<sup>III</sup>/<sup>IV</sup> PC

mitteln in Eingriff gelangt oder mit damit verbundenen Befestigungsmitteln in der Kamera verbunden und der den Kassettenraum abschließende Deckel geschlossen wird, daß durch Betätigung der Filmtransportmittel der Filmstreifen in den Speicherraum transportiert wird, sein Ende jedoch in der Öffnung der Kassette verbleibt, daß anschließend der Filmstreifen Bild für Bild belichtet und nach jeder Belichtung durch die für den Rücktransport vorgesehenen Filmtransportmittel schrittweise um ein Bild in die Tasche (1) zurückgeschoben wird und daß nach dem Zurückschieben des Films in die Tasche (1) die geschlossene Tasche (1) der Kamera entnehmbar ist.

66. Fotografische Kamera für eine Filmkassette mit Filmstreifen nach einem der vorhergehenden Ansprüche, dadurch gekennzeichnet, daß Mittel zum Festlegen des Belichtungsfensters koaxial zur Objektivachse bzw. zum Bildfenster der Kamera vorgesehen sind.

67. Fotografische Kamera nach einem der vorhergehenden Ansprüche, dadurch gekennzeichnet, daß die Befestigungs- oder Festlegemittel durch Führungsschienen (18, 18a, 18b, 18c) und/oder in eine Sonderperforation der Tasche eingreifende Fixierdorne gebildet werden.

CW 2206.0/<sup>I</sup>/<sup>II</sup>/<sup>III</sup>/<sup>IV</sup> PC

68. Fotografische Kamera nach einem der vorhergehenden Ansprüche
dadurch gekennzeichnet, daß die zu beiden Seiten des Belichtungsfensters liegenden Taschenteile vorzugsweise in
je mindestens einem Bogen in zu beiden Seiten des Bildfensters gelegenen Kameraräumen unterbringbar und durch
Führungsmittel (18, 18a, 18b, 18c) gehalten sind.

69. Fotografische Kamera nach einem der vorhergehenden
Ansprüche, dadurch gekennzeichnet, daß die durch einen
Greifer oder ein Perforrad gebildeten Filmtransportmittel
im Randbereich des Belichtungsfensters mit der Filmabläng-
und Filmtransportperforation von Filmvorspann, Filmstreifen
und Filmnachspann zusammenwirken.

70. Fotografische Kamera und Filmkassette mit Filmstreifen
nach einem der vorhergehenden Ansprüche, dadurch gekennzeichnet, daß der Filmstreifen (2) und ggf. die Verschlußkappe (3) je Bildschritt ein Perforationsloch (2a, 3d) aufweisen und daß die Zähne des Perforrades (19) einen derart
bemessenen Winkelabstand haben, daß seine Drehung um einen
Zahn den Filmstreifen (2) um einen Bildschritt verschiebt.

71. Filmkassette nach einem der vorhergehenden
Ansprüche, dadurch gekennzeichnet, daß die
Tasche (401) in einer ihrer Flachseiten (401b)
ein Belichtungsfenster (401c) aufweist, das
durch einen an der Tasche (401) bewegbar gelagerten Verschluß (404; 411) lichtdicht verschließbar bzw. freigebbar ist.

72. Filmkassette nach Anspruch 71, dadurch gekennzeichnet, daß neben dem Belichtungsfenster (401c)
parallel zu einer Taschenlängskante im Bereich
der Perforation des Filmstreifens (402) ein schlitzförmiges Fenster (401d) zum Eingreifen eines kameraseitigen Filmtransport- und/oder Filmablängelementes
vorgesehen ist, das ebenfalls durch den Verschluß
(404, 411) lichtdicht verschließbar bzw. freigebbar
ist.

CW 2206.0/$^{I}$/$^{II}$/$^{III}$/$^{IV}$ PC

73. Filmkassette nach Anspruch 72, dadurch gekennzeichnet, daß in jeder der Flachseiten ein durch den Verschluß (404) verschließbares und freigebbares schlitzförmiges Fenster (401d) vorgesehen ist, wobei die beiden Fenster etwa deckungsgleich angeordnet sind.

74. Filmkassette nach einem der Ansprüche 71 bis 73, dadurch gekennzeichnet, daß das Belichtungsfenster (401c) und ggf. das schlitzförmige Fenster (401d) nahe dem Taschenende vorgesehen sind, welches die dem Durch- bzw. Austreten des Filmstreifens (402) dienende Öffnung (401a) aufweist, so daß der Filmstreifen (402) in einem Speicherraum einer zugehörigen Kamera speicherbar und nach der schrittweisen Belichtung im Bildfenster (401c) in die Tasche (401) zurückführbar ist.

75. Filmkassette nach einem der vorhergehenden Ansprüche, dadurch gekennzeichnet, daß der Verschluß (404) durch einen die Tasche (401) lichtdicht übergreifenden Schieber (404) gebildet wird, dessen Länge mindestens gleich der Ausdehnung des Belichtungsfensters (401c) in Taschenlängsrichtung ist.

76. Filmkassette nach Anspruch 75, dadurch gekennzeichnet, daß der Schieber (404) durch einen über die Tasche (401) gesteckten, geschlossenen Bügel (404) gebildet wird.

77. Filmkassette nach einem der vorhergehenden Ansprüche, dadurch gekennzeichnet, daß der Schieber (404) als die Tasche (401) an der das Belichtungsfenster (401c) aufweisenden Flachseite (401b), an ihren Längskanten und an Teilen der anderen Flachseite übergreifende Klammer (404) ausgebildet ist.

78. Filmkassette nach einem der vorhergehenden Ansprüche, dadurch gekennzeichnet, daß am Schieber (404) wenigstens ein über die Tasche (401) vorstehender Mitnehmer (404a) ausgebildet ist.

79. Filmkassette nach Anspruch 78, dadurch gekennzeichnet, daß die Mitnehmer (404a) dadurch gebildet werden, daß wenigstens ein Außenmaß des Schiebers (404) größer ist als das entsprechende Außenmaß der Tasche (401).

80. Filmkassette nach einem der Ansprüche 75 bis 79, dadurch gekennzeichnet, daß Mittel vorgesehen sind zur Lagesicherung des Schiebers (404) in seiner das Belichtungsfenster (401c) verschließenden Stellung.

81. Filmkassette nach Anspruch 80, dadurch gekennzeichnet, daß der Schieber (404) unter Reibschluß an der Tasche (401) anliegt.

82. Filmkassette nach Anspruch 80 oder 81, dadurch gekennzeichnet, daß der Schieber (404) aus elastischem Material besteht und gegen die Tasche (401) hin eine Verspannung aufweist.

CW 2206.0/$^I$/$^{II}$/$^{III}$/$^{IV}$ PC

83. Filmkassette nach einem der Ansprüche 71 bis 74 oder einem
anderen der vorhergehenden Ansprüche, dadurch gekennzeichnet, daß der Verschluß (411) durch einen in Taschenlängsrichtung zwischen dem Belichtungsfenster (401c) und ggf.
dem schlitzförmigen Fenster (401d) einerseits und dem Filmstreifen (402) andererseits verschiebbarer Schieber (411)
ausgebildet wird.

84. Filmkassette nach Anspruch 83, dadurch gekennzeichnet, daß
am Schieber (411) mindestens ein durch ein Taschenfenster
(401c, 401d) ragender, über die Taschenflachseite (401b)
vorstehende Mitnehmer (411a) vorgesehen ist.

85. Filmkassette nach einem der Ansprüche 1 bis 5, dadurch gekennzeichnet,daß der Vershluß (411) als drehbare Lamelle
(411) ausgebildet ist.

86. Filmkassette nach Anspruch 85, dadurch gekennzeichnet, daß
die Lamelle (411) zwischen dem Belichtungsfenster (401c)
und dem Filmstreifen (402) angeordnet ist.

87. Filmkassette nach einem der Ansprüche 85 oder 86 , dadurch
gekennzeichnet, daß an der Lamelle (411) ein über die Tasche (401) vorstehender Mitnehmer (411a) vorgesehen ist.

88. Filmkassette nach einem der Ansprüche 85 bis 87, dadurch gekennzeichnet, daß die Lamelle (411) vorzugsweise unter der Wirkung einer Feder (408) in ihrer das Belichtungsfenster (401c) verschließenden Lage gesichert ist.

89. Filmkassette nach einem der Ansprüche 85 bis 87, dadurch gekennzeichnet, daß an die Lamelle (411) ein mit einem taschenseitigen Gegenelement in der Abdeckstellung zusammenwirkendes Rastelement angeformt ist.

90. Filmkassette nach einem der Ansprüche 19 bis 24, dadurch gekennzeichnet, daß die Lamelle (411) durch eine im wesentlichen kreisförmige Scheibe gebildet wird, deren Umfang mindestens das Belichtungsfenster (401c) umschreibt und die nahe einer Ecke des Belichtungsfensters (401c) drehbar gelagert ist, und daß das Belichtungsfenster (401c) einen zur Lamellenachse (401k) kreisbogenförmigen Schlitz (4011) aufweist, in den der Mitnehmer (411a) in der das Belichtungsfenster (401c) freigebenden Stellung der Lamelle (411) bewegbar ist.

91. Fotografische Kamera zur Verwendung einer Filmkassette nach einem der vorhergehenden Ansprüche, mit einem Objektiv, einer Bildbühne, einem Kassettenraum für die Tasche, einem Kameradeckel zum Verschließen des Kassettenraums und ggf. einem Speicherraum für den aus der Tasche heraus- und in sie zurückzutransportierenden Filmstreifen, dadurch gekennzeichnet, daß sie Mitnehmer (406h) aufweist, die mit den Mitnehmern (404a) am taschenseitigen Verschluß (404) in Eingriff bringbar sind zur Bewegung des letzteren in die das taschenseitige Bildfenster (401c) freigebende Stellung.

92. Kamera nach Anspruch 91 dadurch gekennzeichnet, daß sie Mitnehmer (407) aufweist, die mit den Mitnehmern (404a) am taschenseitigen Verschluß (404) in Eingriff bringbar sind zur Bewegung des letzteren in die das taschenseitige Bildfenster (401c) abdeckende Stellung.

93. Kamera nach einem der vorhergehenden Ansprüche, dadurch gekennzeichnet, daß in den Kassettenraum (406c) ragende Mitnehmer (406h, 407) vorgesehen sind, mit denen die Mitnehmer (404) des taschenseitigen Verschlusses (404) bei der Einsetz- bzw. Entnahmebewegung der Tasche (401) gegenüber der Kamera (406) in Bewegungseingriff kommen.

94. Kamera nach Anspruch 29, dadurch gekennzeichnet, daß der Kassettenraum (406c) ein Schacht von mindestens der Größe der Tasche einschließlich der Mitnehmer (404a) des taschenseitigen Verschlusses (404) ist, in den die Tasche (401) in Längsrichtungs einschiebbar ist, und daß schachtseitig vor der Bildbühne (406b) durch eine Schachtverengung ein kameraseitiger Mitnehmer (406h) zum Öffnen des Verschlusses (404) gebildet wird.

95. Kamera nach Anspruch 93 oder 94, dadurch gekennzeichnet, daß in den Kassettenraum (406c) ein federnder Mitnehmerhebel (407) in einem Abstand von der Bildbühne (406b) ragt, der so groß ist, daß der Hebel (407) bei eingesetzter Tasche (401) und geöffnetem Taschenverschluß (404) außer Eingriff mit dessen Mitnehmern (404a) steht und bei Entnahmebewegung einer Tasche (401) mit diesen in Bewegungseingriff zum Schließen des Belichtungsfensters (401c) gelangt.

CW 2206.0/$^{I}$/$^{II}$/$^{III}$/$^{IV}$ PC

96. Kamera nach den Ansprüchen 91 und 92, dadurch gekennzeichnet, daß am Kameradeckel (409) Mitnehmer (409b)
vorgesehen sind, die bei der Schließ- bzw. Öffnungsbewegung des Deckels (409) mit den Mitnehmern (404a)
eines taschenseitigen Verschlusses (404) in Bewegungseingriff kommen.

97. Kamera nach Anspruch 96, dadurch gekennzeichnet, daß
der Kameradeckel (409) als parallel zur Bewegungsrichtung der Mitnehmer (404a) eines taschenseitigen
Verschlusses (404) verschiebbarer Schieber ausgebildet
ist und die kameraseitigen Mitnehmer trägt.

98. Kamera nach Anspruch 96 und 97, dadurch gekennzeichnet, daß ein Teil (409a) des Kameradeckels (409)
zur Freigabe des Kassettenraums (406c) und/oder
der Bildbühne (406b) schwenkbar ausgebildet ist
und daß die kameraseitigen Mitnehmer (409b) am
schwenk- und verschiebbaren Teil (409a) angeordnet
sind.

99. Kamera nach Anspruch 98, dadurch gekennzeichnet,
daß die Mitnehmer (409b) als Klauen ausgebildet sind,
die in der unverriegelten, zugeklappten Stellung des
schwenk- und verschiebbaren Teils (409a) beidseitig
außerhalb der Mitnehmer (404a) des taschenseitigen
Verschlusses (404) liegen und bei der zur Verriegelung
bzw. bei der von der verriegelten

CW 2206.0/<sup>I</sup>/II/III/IV PC

in die entriegelte Stellung erforderlichen Bewegung
über die Mitnehmer (404a) des taschenseitigen Verschlusses (404) diesen in die geöffnete bzw. geschlossene Stellung mitnehmen.

100. Filmkassette nach einem der vorhergehenden Ansprüche,
dadurch gekennzeichnet, daß sie aus einem U-förmigen
Abstandshalter bzw. Rahmen (103) besteht und daß zumindest eine Flachseite desselben durch ein Stück (104)
des Taschenmaterials abgeschlossen ist.

101. Filmkassette nach Anspruch 100, dadurch gekennzeichnet, daß der Abstandshalter bzw. Rahmen (103, 108)
drei Schmalseiten und eine Flachseite (108) und, beginnend an der vierten, offenen Schmalseite, eine
bis an die gegenüberliegende Schmalseite reichende
Filmführungsnut (102) aufweist.

102. Verfahren zur Herstellung und Konfektionierung einer
Filmkassette nach Anspruch 100 oder 101, dadurch
gekennzeichnet, daß der Abstandshalter (103) als
wenigstens die beiden Längsseiten und die rückwärtige
Schmalseite aufweisender Rahmen (103) ausgebildet ist
und daß das lichtundurchlässige Taschenmaterial (104)
in einer Breite von etwa der Länge des Rahmens (103)
senkrecht zu dessen Längsrichtung zugeführt und mit
dem Rahmen (103) lichtdicht verbunden wird.

CW 2206.0/$^I$/$^{II}$/$^{III}$/$^{IV}$ PC

103. Verfahren nach Anspruch 102, dadurch gekennzeichnet, daß der Filmstreifen (101) senkrecht
zum Taschenmaterial (104) in Längsrichtung des
Rahmens (103) zugeführt wird und daß das
Taschenmaterial (104) in einer Bahn zugeführt
und in Stücke von der zur Taschenherstellung erforderlichen Länge abtrennbar ist.

104. Verfahren nach Anspruch 103, dadurch gekennzeichnet, daß nach der Zuführung des Taschenmaterials (104) der Rahmen (103) bündig mit
einer Längskante auf eine Breitseite des Taschenmaterials ausgerichtet, mit diesem verbunden und
der zugeschnittene Filmstreifen (101) in den
Rahmen (103) eingelegt wird.

105. Verfahren nach Anspruch 102 oder 103, dadurch
gekennzeichnet, daß nach der Zuführung des
Taschenmaterials (104) senkrecht hierzu in einer
parallelen Ebene der Filmstreifen (101) zugeführt und senkrecht zu diesen beiden Zuführungsrichtungen der Rahmen (103) auf Taschenmaterial (104)
und Filmstreifen (101), den letzteren an drei
Seiten einschließend gelegt wird.

-28-

CW 2206.0/$^I$/$^{II}$/$^{III}$/$^{IV}$ PC

106. Verfahren nach Anspruch 104 oder 105, dadurch gekennzeichnet, daß das abgetrennte
Stück Taschenmaterial (104) um eine Längsschmalseite und die Oberseite des Rahmens
(103) gefaltet und mit den zur Ebene des Filmstreifens (101) parallelen Flächen des
Rahmens (103) verbunden, vorzugsweise verklebt
oder verschweißt wird.

107. Verfahren nach Anspruch 102 oder 103, dadurch gekennzeichnet, daß der Rahmen (103)
zusätzlich an einer seiner Flachseiten abgeschlossen ist und zur Bildung der Tasche an
seiner offenen Flachseite mit einem Stück
Taschenmaterial (104) verschlossen bzw. verbunden wird.

CW 2206.0/$^{I}$/$^{II}$/$^{III}$/$^{IV}$ PC

108. Verfahren nach einem der vorhergehenden Ansprüche, dadurch gekennzeichnet, daß Lichtabdichtungsmittel für die Öffnung (102) im Rahmen (103) vor dessen Zuführung angebracht werden.

Hierzu 15 Blatt Zeichnungen

*Fig.1*

*Fig.2*

*Fig.3*

Fig.4

Fig.5

Fig.6

0014309

Fig.7

Fig.8

Fig.9

Fig.10

Fig.11

Fig.12

Fig. 13

Fig. 15

Fig. 14

Fig. 16

Fig. 17

0014309

Fig. 18

Fig.19

Fig.20

Fig.21

Fig.22

Fig.23

Fig.24

Fig.25

Fig.26

*Fig.27*

404a
404
405
401d
402
401c
401e
401
401b
403
401e
403
401a

*Fig.28*

406a
406
406f
406i 404a
404a 407b 407a 406c 408
404
407
401c
406h
406b 402
406i
401
406g 401a 406d 406h 404a
404a
401
406e
401

Fig.30

404a 404 401 404b

401f

404a 402 404g 404a 404b

Fig.29

>404b

404

404a

404b

404b 405

404a

IV

401d

401c

402

401f

401b

404g

401

403

404a

401f

IV

401a

Fig.33

401h 404a 401 402

404a 404

Fig.34

406a

406

406c

407

401

406h
406b

406i 404a

406l 401h 406d 402 406h 406i 404a 404 404a 406e

Fig. 31

406f  406b  406a 404

406c 402  401

406

406k

406k  409  409b  404a  404a  409a  410

409b

409b

409a

Fig. 32

406f  406b 406a

406

401 402  406b  404  406c  401

406k

406k  409  410 409b 404a  409b  409a

Fig.36

Fig.35

Fig.37

0014309

Nummer der Anmeldung

EP 80 10 6035

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 918 940 (J.J.M. VAN SANTEN) <br> * Seite 3, Zeilen 20-104; Seiten 4,5; Figuren 1-8 * <br><br> -- | 1,71, 73 |
| D | RESEARCH DISCLOSURE, Nr. 176, Dezember 1978, ref. 17637, Seite 17, <br> Havant, G.B. <br> "Film Package and Camera" <br><br> -- | |
| | FR - A - 2 078 438 (LICENTIA PATENTVERWALTUNGS GmbH) <br> * Seiten 2,3; Figuren 1-11 * <br><br> -- | 1-3, 14-17 |
| | FR - A - 2 188 861 (OFFICE NATIONAL D'ETUDES ET DE RECHERCHES AEROSPATIALES) <br> * Seiten 2,3; Figuren 1-10 * <br><br> -- | 1,4-6 71,73- 75 |
| | US - A - 3 653 310 (J.H. VAN OSCH) <br> * Spalte 2, Zeilen 31-75; Spalten 3-7; Figuren 1-6 * <br><br> ---- | 60,63 64 |

### KLASSIFIKATION DER ANMELDUNG (int. Cl.)

G 03 B 17/26
19/02

### RECHERCHIERTE SACHGEBIETE (int. Cl.)

G 03 B 17/26
17/28
17/30
19/00
19/02

G 03 C 3/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 21-04-1980 | BOEYKENS |

EPA form 1503 1 06.78